# EUROPEAN PATENT APPLICATION

(11) **EP 4 472 279 A1**
(43) Date of publication of application: **04.12.2024**
(21) Application number: 22923560.1
(22) Date of filing: 19.12.2022
(51) Int. Cl.: H04W 28/06

(54) **COMMUNICATION METHOD AND DEVICE**

(30) Priority: 28.01.2022 CN 202210108429
(71) Applicant: Datang Mobile Communications Equipment Co., Ltd., Beijing 100085 (CN)
(72) Inventor: TAO, Yuan, Beijing 100085 (CN); WANG, Hucheng, Beijing 100085 (CN); XIONG, Chunshan, Beijing 100085 (CN)
(74) Representative: Cabinet Nony
(86) International application number: PCT/CN2022/139987
(87) International publication number: WO 2023/142774

(57) **Abstract**

The present disclosure provides a communication method and device to solve a problem that current networks do not support resource scheduling or reliability assessment of granularity of media units. The method includes: receiving, by a first network device, a first data stream comprising at least one media unit, each of the at least one media unit comprising one or more data packets; adding, by the first network device, first information into at least one media unit in the first data stream according to media unit information, and/or obtaining a second data stream by adding or modifying a quality of service (QoS) profile. The first information includes identification information for identifying a data packet belonging to a first media unit, and the first media unit is any one of the at least one media unit.

## Description

### CROSSREFERENCE TO RELATED APPLICATION

The present disclosure claims priority to Chinese Patent Application No. 202210108429.7 titled "COMMUNICATION METHOD AND DEVICE" and filed to the China National Intellectual Property Administration on January 28, 2022, the entire contents of which are incorporated herein by reference.

### TECHNICAL FIELD

The present disclosure relates to the field of communication technology, and more particularly, to a communication method and device.

### BACKGROUND

With the development of 5th Generation Mobile Networks (5G) Technologies, there are more and more High Data Rate and Low Latency (HDRLL) services, for example, Extended Reality (XR) services. The XR services include Augmented Reality (AR), Virtual Reality (VR), and Mixed Reality (MR), etc. In the XR services, a data frame cannot be obtained by decoding a packet. Current networks do not support resource scheduling or reliability assessment of granularity of media units (e.g., data frames, slices).

### SUMMARY

Embodiments of the present disclosure provide a communication method and device to solve a problem that current networks do not support resource scheduling or reliability assessment of granularity of media units.

In a first aspect, the embodiments of the present disclosure provide a communication method, including: receiving a first data stream by a first network device, the first data stream comprising at least one media unit, each of the at least one media unit comprising one or more data packets; adding, by the first network device, first information into at least one media unit in the first data stream according to media unit information, and/or obtaining a second data stream by adding or modifying a quality of service (QoS) profile; the first information comprising identification information configured for identifying a data packet belonging to a first media unit, and the first media unit being any one of the at least one media unit; The first network device is an access network device or a user plane function (UPF).

The first information and/or QoS profile may be used for performing resource scheduling on the media unit.

Based on the above solutions, the first network device may process the media unit in the data stream according to the media unit information, and then may perform resource scheduling or reliability assessment on the first media unit.

In a possible implementation, the adding first information into at least one media unit in the first data stream includes:adding the first information into each data packet of the first media unit; or adding the first information into a first data packet of the first media unit; or adding the first information into a last data packet of the first media unit; or adding the first information into the first data packet and the last data packet of the first media unit.

In a possible implementation, the first information is added into a General Packet Radio Service (GPRS) Tunneling Protocol (GTP-U) packet header or an Internet Protocol (IP) layer packet header of a user plane of the data packet.

In a possible implementation, the media unit is any one of a data frame, an application data unit (ADU), a group of pictures (GOP), a slice, a tile, or a slice segment (SS).

In the above implementation, resource scheduling or reliability assessment of multiple granularities is supported to improve universality of applications.

In a possible implementation, the first information also includes number information configured for indicating number of the data packets included in the first media unit.

In the above implementation, by adding the number information to the media unit, complexity of determining the data packets included in each media unit by the device receiving the second data stream is increased.

In a possible implementation, the media unit information comprises an identifier indicative of adding the first information to the first media unit, and/or, adding or modifying the QoS profile.

In the above implementation, resource scheduling of the granularity of the media units is further achieved by supporting modification of the QoS profiles of some required media units.

In a possible implementation, the media unit information also includes first information corresponding to the first media unit and/or the QoS profile.

In a possible implementation, the method also includes: obtaining the media unit information by the first network device from an application function (AF) network element, a session management function (SMF) network element, or a policy control function (PCF) network element.

In a possible implementation, the first network device is an access network device, and the method also includes: obtaining the media unit information by the first network device from the user plane function (UPF).

In a possible implementation, the first network device is a user plane function network element, and the first data stream belongs to a first terminal device. The method also includes: based on the first network device completing update of a protocol data unit (PDU) session in a handover process of the first terminal device and completing acquisition of a data packet belonging to a second media unit, sending the second media unit to a target network device accessed after handover of the first terminal device. The second media unit is a first media unit in the first data stream belonging to the first terminal device received by the first network device after the PDU session is updated.

In the above implementation, based on acquisition of a complete media unit, the complete media unit is sent to a target access network device, to avoid a problem of failure of properly decoding caused by failure of receiving the complete media unit due to handover of an access device resulted from movement of the terminal device.

In a possible implementation, the method also includes: sending, by the first network device, a first message to a source network device accessed before the handover of the first terminal device. The first message is configured for indicating the source network device to disconnect a tunneling connection from the target network device accessed after the handover of the first terminal device.

In a possible implementation, the first network device is a user plane function network element, and the first data stream belongs to a first terminal device. The method also includes: based on the first network device completing update of a protocol data unit (PDU) session in a handover process of the first terminal device and completing acquisition of a data packet belonging to a third media unit, sending the third media unit to a source network device accessed before handover of the first terminal device, the third media unit being a last media unit in the first data stream belonging to the first terminal device received by the first network device before the PDU session is updated; and after obtaining a data packet belonging to a fourth media unit, sending the fourth media unit to a target network device accessed after the handover of the first terminal device, the fourth media unit being a next media unit adjacent to the third media unit.

In the above implementation, based on acquisition of a complete media unit, the complete media unit is sent to a source access network device, to avoid the problem of failure of properly decoding caused by failure of receiving the complete media unit due to handover of the access device resulted from movement of the terminal device.

In a possible implementation, the method also includes: obtaining, by the first network device, a detection rule of the media unit; and determining, by the first network device, the data packet belonging to the first media unit in the first data stream according to the detection rule of the media unit.

In a possible implementation, the detection rule comprises a frame rate, and the determining the data packet belonging to the first media unit in the first data stream according to the detection rule of the media unit comprises: determining, by the first network device, a frame interval according to the frame rate, and determining a boundary of the first media unit within a duration corresponding to the frame interval. A time interval between a last data packet in the first media unit and a first data packet included in a fifth media unit is greater than a time interval between any two data packets included in the first media unit, where the fifth media unit is a next media unit adjacent to the first media unit in the first data stream.

In the above implementation, a simple and feasible way to determine the data packets belonging to the same media unit is provided, which does not need to decode packet headers of the data packets and is also applicable even in the case of data packet encryption.

In a possible implementation, the method also includes: determining, by the first network device, that M consecutive data packets in the first data stream belong to the first media unit, the first media unit being a media unit detected in the first data stream, and the M being an integer greater than or equal to 1. A data volume of a last data packet in the M consecutive data packets is less than a maximum transfer unit (MTU) capacity, and data volumes of data packets other than the last data packet among the M consecutive data packets are equal to the MTU capacity.

In the above implementation, a simple and feasible way to determine the data packets belonging to the same media unit is provided, which does not need to decode packet headers of the data packets and is also applicable even in the case of data packet encryption.

In a possible implementation, the media unit includes a data frame, an ADU or a GOP, the media unit comprises one or more coding units, and each of the one or more coding units is any one of the slice, the SS or the tile. The method also includes: determining, by the first network device, that N consecutive data packets in the first data stream belong to the same coding unit, the N being a positive integer greater than or equal to 1. A data volume of a last data packet in the N consecutive data packets is less than a maximum transfer unit (MTU) capacity, and data volumes of data packets other than the last data packet among the N consecutive data packets are equal to the MTU capacity.

In the above implementation, a simple and feasible way to determine the data packets belonging to the same media unit is provided, which does not need to decode packet headers of the data packets and is also applicable even in the case of data packet encryption.

In a possible implementation, the detection rule at least includes a frame rate, and the determining, by the first network device, the data packet belonging to the first media unit in the first data stream according to the detection rule includes: determining, by the first network device, that K consecutive data packets in the first data stream belong to the first media unit according to the detection rule, the K being an integer greater than or equal to 1. A data volume of one of the K consecutive data packets is less than data volumes of the other (K-1) data packets, and a receiving duration of the K consecutive data packets is less than or equal to a frame interval determined according to the frame rate.

In a possible implementation, the first network device is a user plane function network element, and the method also includes: determining, by the first network device, data packets belonging to the same media unit according to an identifier of an IP layer packet header in a data packet included in the first data stream; or, determining, by the first network device, the data packets belonging to the same media unit in the first data stream according to a deep packet inspection (DPI) algorithm.

In a second aspect, the embodiments of the present disclosure provide a communication device, which includes: a receiving unit configured to receive a first data stream comprising at least one media unit, each of the at least one media unit comprising one or more data packets; and a processing unit configured to add first information into at least one media unit in the first data stream according to media unit information, and/or obtain a second data stream by adding or modifying a quality of service (QoS) profile, the first information comprising identification information configured for identifying a data packet belonging to a first media unit, and the first media unit being any one of the at least one media unit; The communication device is an access network device or a user plane function (UPF); The first information and/or QoS profile is used for performing resource scheduling on the media unit.

In a possible implementation, the media unit is any one of a data frame, an application data unit (ADU), a group of pictures (GOP), a slice, a tile, or a slice segment (SS).

In a possible implementation, the first information also includes number information configured for indicating number of the data packets included in the first media unit.

In a possible implementation, the media unit information comprises an identifier indicative of adding the first information to the first media unit, and/or, adding or modifying the QoS profile.

In a possible implementation, the media unit information also includes first information corresponding to the first media unit and/or the QoS profile.

In a possible implementation, the receiving unit is also configured to obtain the media unit information from an application function (AF) network element, a session management function (SMF) network element, or a policy control function (PCF) network element.

In a possible implementation, the communication device is an access network device, and the receiving unit is also configured to obtain the media unit information from the user plane function (UPF).

In a possible implementation, the communication device is a user plane function network element, the first data stream belongs to a first terminal device, and the communication device also includes: a sending unit configured to send, based on completing update of a protocol data unit (PDU) session in a handover process of the first terminal device and completing acquisition of a data packet belonging to a second media unit, the second media unit to a target network device accessed after handover of the first terminal device, the second media unit being a first media unit in the first data stream belonging to the first terminal device received by the receiving unit after the PDU session is updated.

In a possible implementation, the sending unit is also configured to send a first message to a source network device accessed before the handover of the first terminal device, where the first message is configured for indicating the source network device to disconnect a tunneling connection from the target network device accessed after the handover of the first terminal device.

In a possible implementation, the communication device is a user plane function network element, the first data stream belongs to a first terminal device, and the communication device also includes: the sending unit configured to send, based on completing update of a protocol data unit (PDU) session in a handover process of the first terminal device and completing acquisition of a data packet belonging to a third media unit, the third media unit to a source network device accessed before handover of the first terminal device. The third media unit is a last media unit in the first data stream belonging to the first terminal device received by the receiving unit before the PDU session is updated; After the receiving unit obtains a data packet belonging to a fourth media unit, the sending unit is configured to send the fourth media unit to a target network device accessed after the handover of the first terminal device. The fourth media unit is a next media unit adjacent to the third media unit.

In a possible implementation, the receiving unit is also configured to receive a detection rule of a media unit; and the processing unit is also configured to determine the data packet belonging to the first media unit in the first data stream according to the detection rule of the media unit.

In a possible implementation, the detection rule comprises a frame rate, and in response to determining the data packet belonging to the first media unit in the first data stream according to the detection rule of the media unit, the processing unit is configured to determine a frame interval according to the frame rate, and to determine a boundary of the first media unit within a duration corresponding to the frame interval. A time interval between a last data packet in the first media unit and a first data packet included in a fifth media unit is greater than a time interval between any two data packets included in the first media unit, where the fifth media unit is a next media unit adjacent to the first media unit in the first data stream.

In a possible implementation, the processing unit is also configured to determine that M consecutive data packets in the first data stream belong to the first media unit, where the first media unit is a media unit detected in the first data stream, and the M is an integer greater than or equal to 1. A data volume of a last data packet in the M consecutive data packets is less than a maximum transfer unit (MTU) capacity, and data volumes of data packets other than the last data packet among the M consecutive data packets are equal to the MTU capacity.

In a possible implementation, the media unit comprises a data frame, an ADU or a GOP; the media unit comprises one or more coding units; and each of the one or more coding units is any one of the slice, the SS or the tile.

The processing unit is also configured to determine that N consecutive data packets in the first data stream belong to the same coding unit, where the N is a positive integer greater than or equal to 1. A data volume of a last data packet in the N consecutive data packets is less than a maximum transfer unit (MTU) capacity, and data volumes of data packets other than the last data packet among the N consecutive data packets are equal to the MTU capacity.

In a possible implementation, the detection rule at least includes a frame rate, and the processing unit is configured to determine, in response to determining the data packets belonging to the first media unit in the first data stream according to the detection rule, that K consecutive data packets in the first data stream belong to the first media unit according to the detection rule, where the K is an integer greater than or equal to 1. A data volume of one of the K consecutive data packets is less than data volumes of the other (K-1) data packets, and a receiving duration of the K consecutive data packets is less than or equal to a frame interval determined according to the frame rate.

In a possible implementation, the communication device is a user plane function network element, and the processing unit is also configured to determine data packets belonging to the same media unit according to an identifier of an IP layer packet header in a data packet included in the first data stream, or determine the data packets belonging to the same media unit in the first data stream according to a deep packet inspection (DPI) algorithm.

In a possible implementation, in response to adding first information into at least one media unit in the first data stream, the processing unit is configured to: add the first information into each data packet of the first media unit; or add the first information into a first data packet of the first media unit; or add the first information into a last data packet of the first media unit; or add the first information into the first data packet and the last data packet of the first media unit.

In a possible implementation, the first information is added into a GPRS-GTP-U packet header or an IP layer packet header of a user plane of the data packet.

In a third aspect, the embodiments of the present disclosure provide a communication device, which includes a processor and a memory; The memory is configured to store a program instruction; The processor is configured to call the program instruction stored in the memory, and based on the program instruction, the processor is configured to: receive a first data stream comprising at least one media unit, each of the at least one media unit comprising one or more data packets; add first information into at least one media unit in the first data stream according to media unit information, and/or obtain a second data stream by adding or modifying a quality of service (QoS) profile; The first information comprises identification information configured for identifying a data packet belonging to a first media unit, and the first media unit is any one of the at least one media unit; The communication device is an access network device or a user plane function (UPF).

In a possible implementation, the media unit is any one of a data frame, an application data unit (ADU), a group of pictures (GOP), a slice, a tile, or a slice segment (SS).

In a possible implementation, the first information also includes number information configured for indicating number of the data packets included in the first media unit.

In a possible implementation, the media unit information comprises an identifier indicative of adding the first information to the first media unit, and/or, adding or modifying the QoS profile.

In a possible implementation, the media unit information also includes first information corresponding to the first media unit and/or the QoS profile.

In a possible implementation, the processor is also configured to: obtain the media unit information from an application function (AF) network element, a session management function (SMF) network element, or a policy control function (PCF) network element.

In a possible implementation, the communication device is an access network device, and the processor is also configured to: obtain the media unit information from the user plane function (UPF).

In a possible implementation, the communication device is a user plane function network element, and the first data stream belongs to a first terminal device; The processor is also configured to: send, based on completing update of a protocol data unit (PDU) session in a handover process of the first terminal device and completing acquisition of a data packet belonging to a second media unit, the second media unit to a target network device accessed after handover of the first terminal device. The second media unit is a first media unit in the first data stream belonging to the first terminal device received by the processor after the PDU session is updated.

In a possible implementation, the processor is also configured to send a first message to a source network device accessed before the handover of the first terminal device. The first message is configured for indicating the source network device to disconnect a tunneling connection from the target network device accessed after the handover of the first terminal device.

In a possible implementation, the communication device is a user plane function network element, and the first data stream belongs to the first terminal device; the processor is also configured to send, based on completing update of a protocol data unit (PDU) session in a handover process of the first terminal device and completing acquisition of a data packet belonging to a third media unit, the third media unit to a source network device accessed before handover of the first terminal device, the third media unit being a last media unit in the first data stream belonging to the first terminal device received by the processor before the PDU session is updated; and send, after obtaining a data packet belonging to a fourth media unit, the fourth media unit to a target network device accessed after the handover of the first terminal device, the fourth media unit being a next media unit adjacent to the third media unit.

In a possible implementation, the processor is also configured to obtain a detection rule of a media unit; and determine the data packet belonging to the first media unit in the first data stream according to the detection rule of the media unit.

In a possible implementation, the detection rule comprises a frame rate, and the processor is also configured to determine a frame interval according to the frame rate, and determine a boundary of the first media unit within a duration corresponding to the frame interval; a time interval between a last data packet in the first media unit and a first data packet included in a fifth media unit is greater than a time interval between any two data packets included in the first media unit, where the fifth media unit is a next media unit adjacent to the first media unit in the first data stream.

In a possible implementation, the processor is also configured to determine that M consecutive data packets in the first data stream belong to the first media unit, the first media unit being a media unit detected in the first data stream, and the M being an integer greater than or equal to 1; Wherein a data volume of a last data packet in the M consecutive data packets is less than a maximum transfer unit (MTU) capacity, and data volumes of data packets other than the last data packet among the M consecutive data packets are equal to the MTU capacity.

In a possible implementation, the media unit comprises a data frame, an ADU or a GOP; the media unit comprises one or more coding units; and each of the one or more coding units is any one of the slice, the SS or the tile.

The processor is also configured to determine that N consecutive data packets in the first data stream belong to the same coding unit, the N being a positive integer greater than or equal to 1; A data volume of a last data packet in the N consecutive data packets is less than a maximum transfer unit (MTU) capacity, and data volumes of data packets other than the last data packet among the N consecutive data packets are equal to the MTU capacity.

In a possible implementation, the detection rule at least includes a frame rate, and the processor is also configured to determine that K consecutive data packets in the first data stream belong to the first media unit according to the detection rule, the K being an integer greater than or equal to 1; A data volume of one of the K consecutive data packets is less than data volumes of the other (K-1) data packets, and a receiving duration of the K consecutive data packets is less than or equal to a frame interval determined according to the frame rate.

In a possible implementation, the communication device is a user plane function network element, and the processor is also configured to determine data packets belonging to the same media unit according to an identifier of an IP layer packet header in a data packet included in the first data stream; or determine the data packets belonging to the same media unit in the first data stream according to a deep packet inspection (DPI) algorithm.

In a possible implementation, the processor is also configured to: add the first information into each data packet of the first media unit; or add the first information into a first data packet of the first media unit; or add the first information into a last data packet of the first media unit; or add the first information into the first data packet and the last data packet of the first media unit.

In a possible implementation, the first information is added into a GPRS-GTP-U packet header or an IP layer packet header of a user plane of the data packet.

In a fourth aspect, the embodiments of the present disclosure provide a non-volatile computer-readable storage medium, where computer instructions are stored on the non-volatile computer-readable storage medium. The computer instructions are executable by a computer, which causing the computer to perform the method as described in the first aspect and different implementations of the first aspect.

In addition, the technical effects brought by any of the implementations from the second aspect to the fourth aspect can be referred to the technical effects brought by the first aspect and different implementations in the first aspect, thus detailed descriptions thereof are omitted here.

### BRIEF DESCRIPTION OF THE DRAWINGS

To describe the technical solutions of the embodiments of the present disclosure or those of the prior art more clearly, the accompanying drawings required for describing the embodiments or the prior art will be briefly introduced below. Apparently, the accompanying drawings in the following description are merely some embodiments of the present disclosure. To those of ordinary skills in the art, other accompanying drawings may also be derived from these accompanying drawings without creative efforts.
FIG. 1 is a schematic diagram of a video coding bitstream according to an embodiment of the present disclosure;
FIG. 2 is a schematic structural diagram of an NAL unit according to an embodiment of the present disclosure;
FIG. 3 is a schematic diagram of dividing video frames by slices according to an embodiment of the present disclosure;
FIG. 4 is a schematic diagram of a communication network architecture according to an embodiment of the present disclosure;
FIG. 5 is a schematic flow diagram of a communication method according to an embodiment of the present disclosure;
FIG. 6 is a schematic diagram of data frame transmission rules according to an embodiment of the present disclosure;
FIG. 7 is a schematic diagram of a method for determining data packets belonging to the same coding unit according to an embodiment of the present disclosure;
FIG. 8 is a schematic flow diagram of a communication method according to an embodiment of the present disclosure;
FIG. 9 is a schematic flow diagram of another communication method according to an embodiment of the present disclosure;
FIG. 10 is a schematic flow diagram of yet another communication method according to an embodiment of the present disclosure;
FIG. 11 is a schematic flow diagram of still another communication method according to an embodiment of the present disclosure;
FIG. 12 is a schematic flow diagram of still another communication method according to an embodiment of the present disclosure;
FIG. 13 is a schematic flow diagram of still another communication method according to an embodiment of the present disclosure;
FIG. 14 is a schematic flow diagram of still another communication method according to an embodiment of the present disclosure;
FIG. 15 is a schematic diagram of a communication device according to an embodiment of the present disclosure; and
FIG. 16 is a schematic diagram of another communication device according to an embodiment of the present disclosure.

### DETAILED DESCRIPTION

To make the objectives, technical solutions, and advantages of the present disclosure clearer, the present disclosure will be further described below in detail with reference to the accompanying drawings. Apparently, the described embodiments are some but not all of the embodiments of the present disclosure. All other embodiments obtained by a person of ordinary skill in the art based on the embodiments of the present disclosure without creative efforts shall fall within the protection scope of the present disclosure.

Application scenarios described in the embodiments of the present disclosure are to more clearly explain the technical solutions of the embodiments of the present disclosure, and do not constitute limitations on the technical solutions provided in the embodiments of the present disclosure. Those of ordinary skill in the art can know that with the emergence of new application scenarios, the technical solutions provided in the embodiments of the present disclosure are also applicable to similar technical problems. In the description of the present disclosure, "a plurality of" means two or more unless otherwise stated.

The technical solutions provided in the embodiments of the present disclosure may be applicable to a variety of systems, especially 5G systems. For example, the applicable systems may be Global System of Mobile Communication (GSM) systems, Code Division Multiple Access (CDMA) systems, Wideband Code Division Multiple Access (WCDMA) General Packet Radio Service (GPRS) systems, Long Term Evolution (LTE) systems, LTE Frequency Division Duplex (FDD) systems, LTE Time Division Duplex (TDD) systems, Long Term Evolution Advanced (LTE-A) systems, Universal Mobile Telecommunication System (UMTS), Worldwide Interoperability for Microwave Access (WiMAX) systems, and 5G New Radio (NR) systems, etc. Each of these systems includes a terminal device and a network device. The system may also include a core network, such as Evolved Packet System (EPS), or 5G System (5GS), etc.

The terminal devices referred to in the embodiments of the present disclosure may be devices providing voice and/or data connectivity to users, handheld devices with wireless connectivity functions, or other processing devices connected to wireless modems, etc. In different systems, the terminal devices may have different names. For example, in the 5G systems, the terminal devices may be referred to as User Equipment (UE). A wireless terminal device may communicate with one or more Core networks (CN) via a Radio Access Network (RAN). The wireless terminal device may be a mobile terminal device such as a mobile telephone (or "cellular" telephone) and a computer with a mobile terminal device. For example, the wireless terminal device may be portable, pocket, handheld, computer built-in or vehicle-mounted mobile apparatuses, which exchange language and/or data with the RAN. For example, the wireless terminal device may be a Personal Communication Service (PCS) telephone, a cordless telephone, a Session Initiated Protocol (SIP) telephone, a Wireless Local Loop (WLL) station, or a Personal Digital Assistant (PDA) device, etc. The wireless terminal device may also be referred to as a system, a subscriber unit, a subscriber station, a mobile station, a mobile, a remote station, an access point, a remote terminal, an access terminal, a user terminal, a user agent, or a user device, but is not limited thereto in the embodiments of the present disclosure.

The access network device referred to in the embodiments of the present disclosure may be a base station, which may include a plurality of cells providing services to the terminal. Depending on different specific application scenarios, the base station may also be referred to as an access point, or may be a device in the access network that communicates with the wireless terminal device through one or more sectors on an air interface, or may have other names. The access network device may be configured to exchange received air frames with Internet Protocol (IP) packets, and may serve as a router between the wireless terminal device and rest parts of the access network, where the rest parts of the access network may include Internet Protocol (IP) communications network. The access network device also can coordinate attribute management of the air interface. For example, the access network device referred to in the embodiments of the present disclosure may be a Base Transceiver Station (BTS) in a Global System for Mobile communications (GSM) or Code Division Multiple Access (CDMA), or may be an access network device (NodeB) in Wide-band Code Division Multiple Access (WCDMA), or may be an evolutional Node B (eNB or e-NodeB) in a long term evolution (LTE) system or a 5G base station (gNB) in a 5G network architecture (next generation system), or may be a Home evolved Node B (HeNB), a relay node, a femtocell (femto), or a picocell (pico), etc., but is not limited thereto in the embodiments of the present disclosure. In some network architectures, the access network device may include a centralized unit (CU) node and a distributed unit (DU) node, where the centralized unit and the distributed unit may also be geographically separated.

The access network device and the terminal device may each use one or more antennas for Multi Input Multi Output (MIMO) transmission, where the MIMO transmission may be Single User MIMO (SU-MIMO) or Multiple User MIMO (MU-MIMO). Depending on shape and number of root antenna combinations, the MIMO transmission may be 2D-MIMO, 3D-MIMO, FD-MIMO or massive MIMO, or may also be diversity transmission or precoding transmission or beamforming transmission.

In some possible scenarios, the access network devices may also be referred to as a network device, but is not limited thereto in the embodiments of the present disclosure.

The "network element" referred to in the embodiments of the present disclosure may also be referred to as a "device", but is not limited thereto in the present disclosure. The network element may be hardware, or may be software obtained through functional division, or a structure obtained by combining the two. The network element may include a core network element or an access network element (or access network device), etc. The core network element may include, for example, a mobility management network element, an authentication network element, or a data management network element, etc.

Some technical concepts or terms referred to in the embodiments of the present disclosure are briefly described below.

### 1) Group of Pictures (GOP)

Based on High Efficiency Video Coding (HEVC) standards, a coded video stream is comprised of a series of GOP arranged in sequence. The GOP is a set of continuous pictures, comprising one I-Frame and multiple B/P-Frames, which is a basic unit of access for video image encoder and decoder, and its arrangement sequence may be repeated until end of an image. The I-Frame is an internally coded frame (also known as a key frame), the P-Frame is a forward prediction frame (forward reference frame), and the B-Frame is a bidirectional interpolated frame (bidirectional reference frame). The I-frame may be considered as a complete picture, while the P-frame and the B-frame record changes with respect to the I-frame. Without the I-frame, the P-frame and the B-frame cannot be decoded.

### 2) Network Abstract Layer (NAL) unit

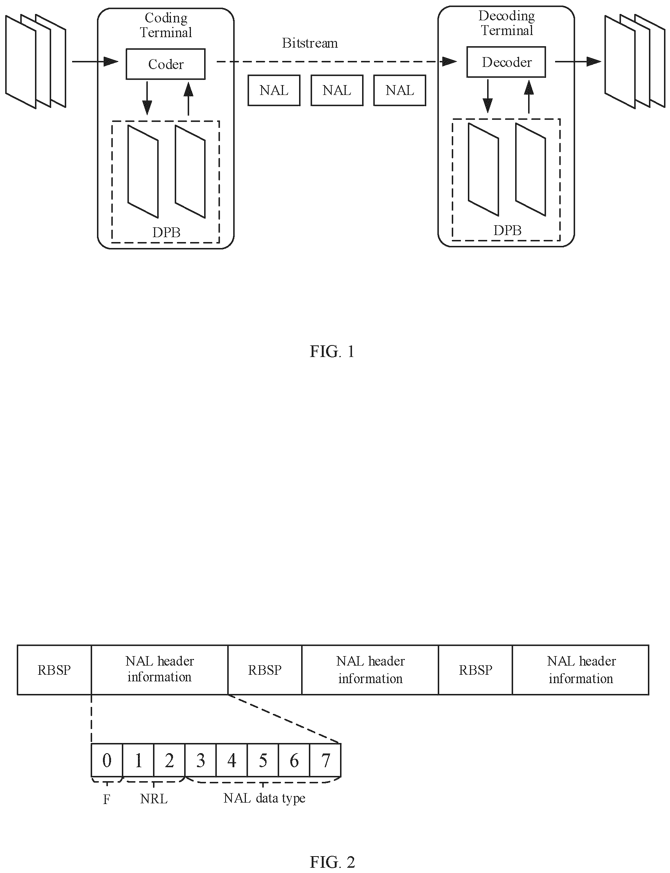

A video coding bitstream is divided into a plurality of NAL units, and when it is transmitted over an IP network, the NAL unit should be smaller in size than a Maximum Transfer Unit (MTU) allowed by the network. Each NAL unit comprises an NAL unit header and an NAL unit load following closely, as shown in FIG. 1.

A specific structure of the NAL unit may be shown in FIG. 2, including Raw Byte Sequence Payload (RBSP) information and one-byte NAL header information (NAL_Header). The NAL header information consists of Forbidden (F), Network Reference Level (NRI), and NAL unit data type (NAL_Type). F takes a first digit of the NAL unit header, and indicates a syntax error when its value is 1. The NRI takes a second digit and a third digit of the NAL unit header, and the larger its value is, the more important the NAL unit is. The NAL_Type takes a fourth digit to an eighth digit of the NAL unit header and is used to indicate the data type of the NAL unit.

### 3) Video frame

A video frame may also be referred to as an image frame, which may be divided into a slice or tile, and the slice may be subdivided into a slice segment (SS).

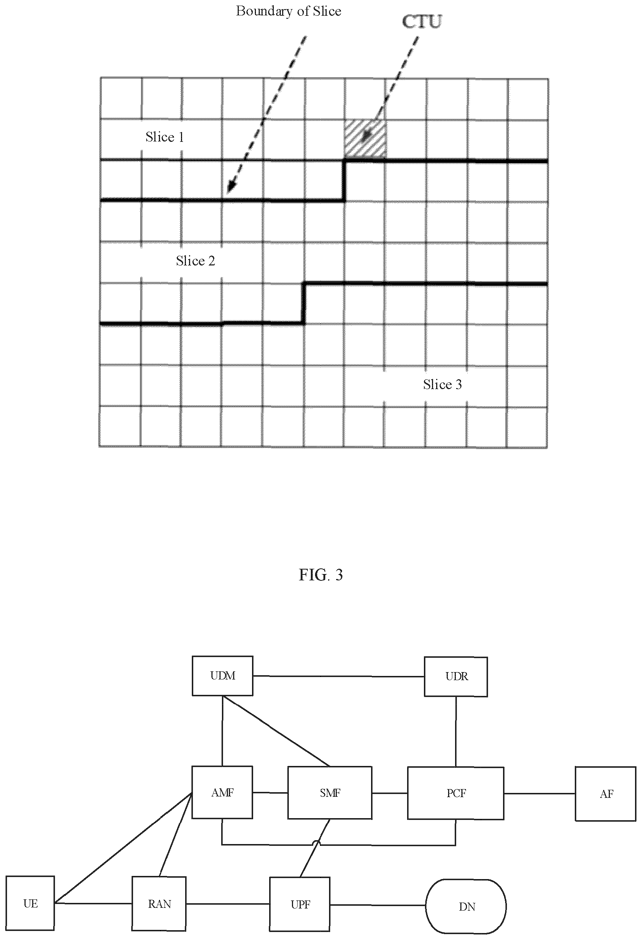

The slice may be independent of data structures encoded independently by other slices in the same image, including signal prediction, residual signal reconstruction, and entropy coding. Each slice or SS may be encapsulated as an NAL unit for transmission. Generally, a maximum number of bits may be used to limit capacity of the slice. For example, to package transmission in a wired or wireless network, the capacity of the slice is required to be less than the MTU capacity, as shown in FIG. 3.

### 4) XR application

A data unit or media unit for an XR application may be a data frame or an Application Data Unit (ADU). The ADU is different from a single data packet or Protocol Data Unit (PDU).

From a coding point of view, one ADU may include one or more slices or slice segments or tiles. From a transmission point of view, one ADU may include one or more data packets. The data packet may be one PDU. The ADU may include one or more data packets or PDUs. The data frame may include one or more ADUs.

Required information included in a plurality of data packets in one ADU may be reconstructed into one video frame. Generally, a receiving terminal cannot decode or use an ADU or video frame unless it receives all packets of this ADU or all ADUs included in this video frame. Therefore, it is needed to ensure that all packets of the ADU or video frame are received accurately. For example, a video creates sensation of movement in a human eye by playing a series of pictures.

### 5) Packet Detection Rules (PDR)

PDR is a set of packet filters. The PDR may include one or more of source/destination IP address or IPv6 prefix, source/destination port number, protocol ID above IP/ next header type, Type Of Service TOS (IPv4)/service level (IPv6) and mask, flow label (IPv6), security parameter index, and packet filter direction, etc. The flow label may be used to mark a packet of a specific flow, such that different packets may be distinguished at a network layer.

Referring to FIG. 4, a schematic diagram of two possible communication network architectures in the embodiments of the present disclosure is provided. The communication network architecture may include a terminal device, a data network (DN), and a carrier network. Functions of some network elements are briefly described below.

The carrier network may include one or more of an Authentication Server Function (AUSF) network element, a Network Exposure Function (NEF) network element (not shown in FIG. 4), a Policy Control Function (PCF) network element, a Unified Data Management (UDM) network element, a Unified Data Repository (UDR), a Network Repository Function (NRF) network element (not shown in FIG. 4), an Application Function (AF) network element, an Access and Mobility Management Function (AMF) network element, a Session Management Function (SMF) network element, a RAN network element, a User Plane Function (UPF) network element, and a Unified Data Repository (UDR) network element, etc. In the above-mentioned carrier network, a part other than the Radio Access Network may also be referred to as the core network.

Functions of each of the above network elements are briefly described below.

The AMF network element takes charge of user registration and mobility management, etc.

The UPF network element serves as an external PDU session node interconnected to the data network and takes charge of packet routing and forwarding.

The SMF network element takes charge of session establishment and deletion, user plane selection and control, and IP assignment of UE, etc.

The AF network element interacts with a 3GPP core network to provide services. Depending on deployment of a carrier, a trusted AF may directly interact with a relevant network function (NF), while a non-trusted AF cannot directly interact with the NF, but should interact with the NF via NEF by using an external exposure framework.

The PCF network element supports a unified policy framework to govern network behavior and provides policy rules to control NF execution.

The NRF network element supports a service discovery function.

The UDM network element is configured to store information of the UE, such as subscription information and information of a PDU session established.

The NEF network element provides relevant functions to securely expose the services and capabilities provided by the 3GPP network to external networks.

The UDR network element takes charge of storing subscription data and retrieval of the subscription data by UDM FE. The UDR network element also takes charge of storage of policy information and the retrieval of the policy information by PCF.

In addition, to make the description more concise, "network element" is deleted from each functional network element in the subsequent description. For example, the SMF network element is referred to as SMF for short, the UPF network element is referred to as UPF for short, and so on.

As mentioned in the background technology, none of the current solutions supports resource scheduling or reliability assessment of granularity of the media units, etc. On this basis, the embodiments of the present disclosure provide a communication method and device to support access network devices to perform the resource scheduling or reliability assessment of the granularity of the media units, etc. According to the embodiments of the present disclosure, media unit information may be obtained by a first network device, where the media unit information may be used for adding first information into the media unit, or adding (or modifying) a quality of service (QoS) profile, or adding the first information and adding (or modifying) the QoS profile. In this way, the access network device is supported to perform resource scheduling or reliability assessment of the granularity of the media units. The first network device may be an access network device or a UPF.

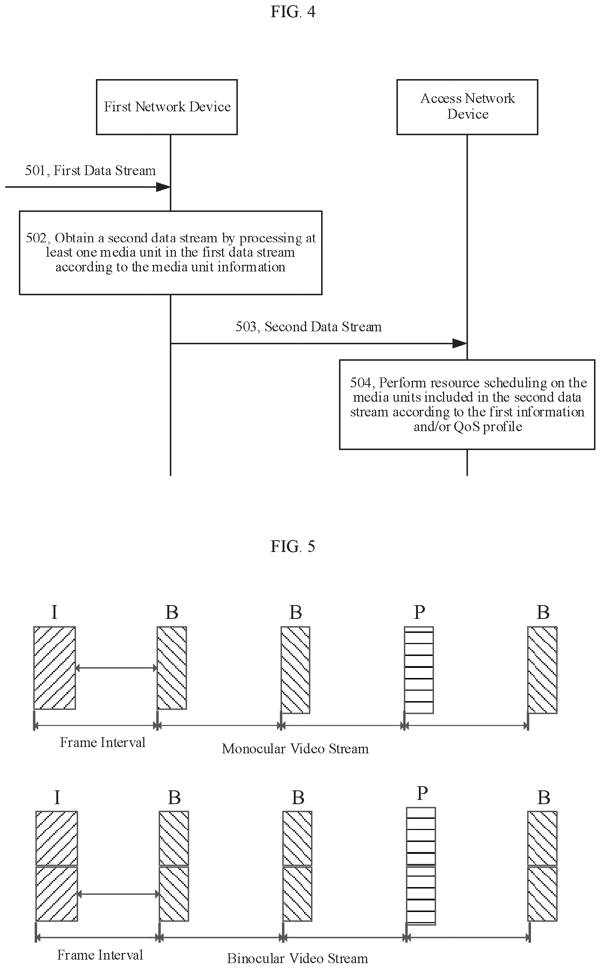

Referring to FIG. 5, a schematic flow diagram of a communication method according to an embodiment of the present disclosure is provided.

In Step 501, the first network device receives a first data stream, which includes at least one media unit, where each of the at least one media unit includes one or more data packets.

In Step 502, the first network device obtains a second data stream by processing at least one media unit in the first data stream according to the media unit information.

In some embodiments, when processing at least one media unit in the first data stream, the first network device may process all media units or some media units in the first data stream.

The media unit may be any one of the data frame, the ADU, the GOP, the slice, the tile, or the SS.

The processing may include obtaining the second data stream by adding the first information, and/or, adding or modifying the QoS profile. The first information includes identification information configured for identifying a data packet belonging to a first media unit, and the first media unit is any one of the at least one media unit. The first information and/or QoS profile is used for performing resource scheduling on the media unit.

For example, the identification information included in the first information for identifying the data packet belonging to the first media unit may be referred to as an application unit identifier, which may also be understood as being used to associate data packets belonging to the same media unit.

The first network device may be an access network device, or the first network device may also be a UPF. In the case that the first network device is the UPF, the method also includes Steps 503 to 504.

In Step 503, the first network device sends the second data stream to the access network device.

In Step 504, the access network device performs resource scheduling on the media units included in the second data stream according to the first information and/or QoS profile.

In some scenarios, the access network device may also perform statistical assessment according to the first information and/or QoS profile.

In some scenarios, in the case that the processing includes adding the first information, processing the first media unit is taken as an example, the first network device may add the first information into the first media unit in any one of the following four ways.

In the first way, the first network device may add the first information into each data packet in the first media unit. For example, the first network device may add the application unit identifier to each data packet belonging to the same media unit. For example, the first network device adds the application unit identifier=001 to each data packet of a data frame 1.

In the second way, the first network device adds the first information into a first data packet of the first media unit. For example, the first network device only adds the application unit identifier to the first data packet of a media unit to indicate the beginning of the media unit. For example, the first network device adds the application unit identifier=001 to the first data packet of the data frame 1.

In the third way, the first network device adds the first information into a last data packet of the first media unit. For example, the first network device only adds the application unit identifier to the last data packet of a media unit to indicate the end of the media unit. For example, the first network device adds the application unit identifier=001 to the last data packet of the data frame 1.

In the fourth way, the first network device adds the first information into the first data packet and the last data packet of the first media unit. For example, the first network device adds the application unit identifier to the first data packet and the last data packet of a media unit respectively to indicate the beginning and the end of the media unit. For example, the first network device adds the application unit identifier=001 to the first data packet of the data frame, and adds the application unit identifier=001a to the last data packet.

Either of the following two ways may be selected to add the first information to the data packet.

In the first way, the first information is added to a User Plane Part of GTP (GTP-U) header by the GPRS.

In the second way, the first information is added to an outer Internet Protocol (IP) packet header. For example, the first information is added by means of Differentiated Services Code Point (DSCP).

In some possible examples, the first information may also include, on the basis of including identification information configured for identifying a data packet belonging to the first media unit, number of packets included in the first media unit. For example, number of packets=20 indicates that the media unit includes 20 data packets in total.

In one possible embodiment, the media unit information obtained by the first network device may include an indication identifier. This indication identifier may be used to indicate which media unit is processed. Taking the first media unit as an example, the indication identifier may be used to indicate that the first media unit is processed. For example, the indication identifier indicates to which media units the first information is added, or indicates to which media unit the QoS profile is applied.

For example, the indication identifier may be a flag (for example, when a data packet carries the flag, it indicates that the data packet needs to be processed). In the case that one data frame includes a plurality of media units (for example, data packets or slices), the indication identifier may be order, which indicates the order of a media unit in the data frame (for example, which data packet of the data frame is received). For another example, the indication identifier may also be a frame type, such as I-frame or B-frame or P-frame.

The QoS profile may be one or more of Packet Error Rate (PER), delay, priority level, or jitter. One indication identifier corresponds to one QoS profile or QoS profile list. For example, {flag 1=01, PER=10⁻³, priority level=30, delay=2ms}. For another example, {flag 2=02, PER=10⁻⁶}. For still another example, {order=3, PER=10⁻³}. For still another example, {frame=I, PER=10⁻⁷, priority level=10}.

In some embodiments, the first information and/or the QoS profile to be added may also be obtained from the media unit information.

In one possible embodiment, before processing at least one media unit in the first data stream in combination with the media unit information, the first network device recognizes the data packets belonging to the same media unit included in the first data stream. In this case, the first network device may be the UPF or the access network device.

The first network device may recognize the data packets belonging to the same media unit included in the first data stream by means of any one of the following possible implementations. Recognizing the first media unit is taken as an example.

In the first implementation, the first network device may recognize the data packets belonging to the first media unit in the first data stream according to a detection rule of the media unit. The detection rule may include a frame rate or a GOP sequence. The first network device determines a frame interval according to the frame rate, and determines a boundary of the first media unit within a duration corresponding to the frame interval. For example, a next media unit adjacent to the first media unit is a fifth media unit. A time interval between a last data packet in the first media unit and a first data packet included in the fifth media unit is greater than a time interval between any two data packets included in the first media unit.

For example, when the frame rate=25fps, the interval between each two data frames may be calculated as 40ms. In an actual transmission process of the data frames, the actual frame interval used by each data frame is generally much lower than 40ms (for example, bit rate=10Mbps, frame size=0.1Mb, frame interval=10ms). Generally, a maximum delay for video data is 10-20ms, and a maximum delay for audio data is only 5ms. Therefore, even considering the maximum transmission delay, there is a period of longer transmission idle time when transmission of each data frame is completed. The transmission idle time is much greater than a transmission interval between two adjacent data packets in the data frame. It should be noted that monocular or 3D binocular video transmission scenarios all meet the above transmission rules, referring to FIG. 6. In some scenarios, the transmission idle time may be determined according to the frame interval, and an experience duration may be determined according to the transmission delay in combination with the transmission idle time. In response to estimating a receiving time interval between one data packet and a next data packet is greater than the experience duration, the data packet is determined as the last data packet of the data frame.

In the second implementation, the first network device may determine the boundary of each media unit in combination with segmentation rules of each data packet, that is, to determine the data packets belonging to the same media unit. Taking the first media unit as an example, for example, the boundary of the first media unit is determined according to the smallest data packet recognized. The first network device determines that M consecutive data packets in the first data stream belong to the first media unit. M is an integer greater than or equal to 1. If M is equal to 1, the first media unit includes one data packet, which is smaller than the MTU capacity. If M is greater than 1, the first media unit includes a plurality of consecutive data packets, a data volume of a last data packet among the plurality of consecutive data packets is less than the MTU capacity, and data volumes of data packets other than the last data packet among the M consecutive data packets are equal to the MTU capacity.

For example, if the data frame has a size of 1484 bytes and its MTU capacity is 5 bytes, the data packets are segmented by 5 bytes (MTU capacity) for sequential transmission. In this case, each of top 296 data packets has a size of 5 bytes, and the last data packet only has a size of 4 bytes. The current data frame has a size ranged from 46 bytes to 1500 bytes (based on IEEE 802.3 definition), and after the data packets are segmented, generally the last data packet is smaller than previously transmitted data packets. Therefore, based on the size of the data packet, the first network device may estimate the last data packet of each media unit, which is the boundary.

In the third implementation, an example is taken where the media unit includes the data frame or ADU. The media unit includes one or more coding units, which may be any one of the slice, the SS, or the tile. The first network device may determine the boundary of each coding unit according to the segmentation rules of each coding unit, that is, to determine the data packets belonging to the same coding unit. Taking the first media unit as an example, for example, the boundary of each coding unit in the first media unit is determined according to the smallest data packet recognized. The first network device determines that N consecutive data packets in the first data stream belong to the same coding unit, where N is a positive integer greater than or equal to 1. Taking a first coding unit as an example, if N is equal to 1, the first coding unit includes one data packet smaller than the MTU capacity. If N is greater than 1, the first media unit includes a plurality of consecutive data packets, a data volume of a last data packet among the plurality of consecutive data packets is less than the MTU capacity, and data volumes of data packets other than the last data packet among the N consecutive data packets are equal to the MTU capacity.

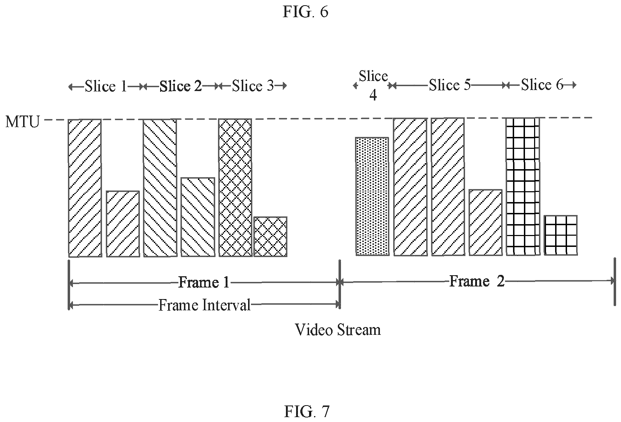

For example, each slice or SS is transmitted as one or more NAL units. That is, each slice or SS includes one or more data packets. Characteristics of the data packet included in each slice or SS are as below: a*MTU+ packet!, where a is 0 or other positive integer. In the case that the data volume of the slice or SS is smaller than the MTU capacity, one slice or SS may be transmitted via one packet 1 (where a=0). In the case that the data volume of the slice or SS is greater than the MTU capacity, one slice or SS is segmented into a plurality of data packets for transmission, and generally is segmented into a plurality of data packets equal to the MTU capacity and one data packet smaller than the MTU capacity, that is, a*MTU+ packet2, a=0. The capacity of packet2 is smaller than the MTU capacity, as shown in FIG. 7.

In the fourth implementation, the boundary of the media unit is determined in combination with the frame rate and the second implementation. The first network device determines that K consecutive data packets in the first data stream belong to the first media unit according to the detection rule (including the frame rate), where K is an integer greater than or equal to 1. A data volume of one of the K consecutive data packets is less than data volumes of the other (K-1) data packets, and a receiving duration of the K consecutive data packets is less than or equal to a frame interval determined according to the frame rate. For example, in some scenarios, the data packets belonging to the first media unit are in disorder. In this case, the data packet with the smallest data volume is likely not transmitted last due to disorder. To prevent occurrence of this case, after the data packet with the smallest data volume is determined, it may be determined that the receiving duration of the smallest data packet + X data packets with the MTU capacity before the smallest data + Y data packets with the MTU capacity ranked after the smallest data packet is less than or equal to the frame interval. X+Y=K-1. In some scenarios, a transmission interval between the smallest data packet and the data packets with the MTU capacity ranked after the smallest data packet is not greater than or equal to the experience duration. In this case, it is determined that the smallest data packet is not the last data packet of the media unit.

In the fifth implementation, the first network device detects an identification field of an IP packet header of each data packet in the first data stream to determine the data packets belonging to the same media unit. For example, if an IPV4 packet header has an identification field, the first network device supports to detect the IPV4 packet header.

In the sixth implementation, the first network device determines the data packets belonging to the same media unit in the first data stream according to an DPI algorithm.

It should be noted that the first implementation to the fourth implementation are applicable to encrypted and unencrypted data packets. For example, for encrypted data traffic, characteristics of the data flow may be analyzed without analyzing the data header.

In some embodiments, in the case that the first network device is an access network device, the access network device may obtain contents included in the media unit information from at least one of the AF, the SMF, the UPF, or the PCF.

In other embodiments, in the case that the first network device is the UPF, the UPF may obtain the contents included in the media unit from at least one of the AF, the SMF, or the PCF.

Also referred to as application unit, the media unit information may also have other names, which are not limited in the present disclosure. Specific methods for obtaining the contents included in the media unit will be described in detail below, and thus detailed descriptions thereof are omitted here.

The solutions provided by the embodiments of the present disclosure are described below with reference to specific scenarios.

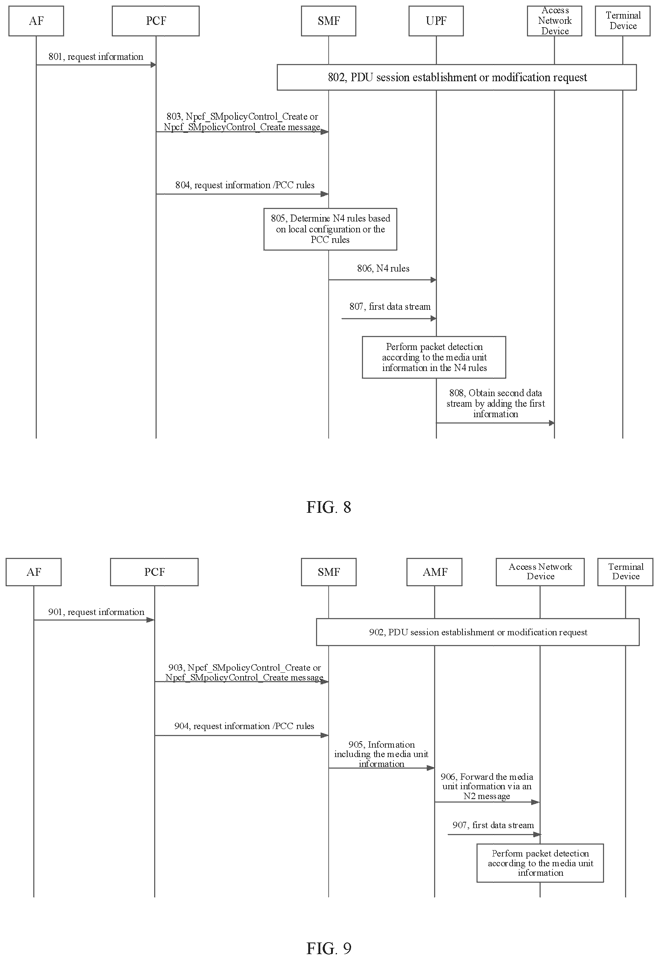

Referring to FIG. 8, a schematic flow diagram of a communication method according to Embodiment I of the present disclosure is provided. In this method, an example is taken where the UPF performs packet detection on the same media unit, and next, the access network device performs resource scheduling on each media unit.

In Step 801, the AF may send request information to the NEF/PCF.

For example, the AF may send the request information to the NEF by calling Nnef_AFsessionWithQoS_Create or Nnef_AFsessionWithQoS_Update. Alternatively, the AF may send the request information to the PCF by calling Npcf_PolicyAuthorization_Create or Npcf_PolicyAuthorization_Update.

The request information may include information such as the frame rate and/or the GOP. Alternatively, the information such as the frame rate and/or the GOP may be included in the media unit information (application unit). The application unit is included in the request information.

In some embodiments, the request information may also include indication information indicative of detecting data flow characteristics to encapsulate the first information. Methods for detecting the data flow characteristics may be any one of the first implementation to the sixth implementation previously described. The indication information may also be included in the media unit information.

In Step 802, the terminal device sends a PDU session establishment or modification request to the SMF.

In Step 803, in response to receiving the PDU session establishment or modification request from the terminal device, the SMF may send Npcf_SMpolicyControl_Create or Npcf_SMpolicyControl_Create message to the PCF.

If the SMF receives the PDU session establishment request, the PCF may determine, according to information such as Single Network Slice Selection Assistance Information (S-NSSAI) or Data Network Name (DNN), the PDU session established for transmission of XR services.

In some embodiments, the PCF may also determine, according to network policies or application layer requirements (request information sent by the AF), that the media unit needs to be processed. The PCF generates corresponding Policy and Charging Control (PCC) rules based on the network policies or AF requests, where the PCC rules may include the media unit information.

In some embodiments, indication information in the media unit information is not included in the request information sent by the AF, and the PCF may add the indication information into the PCC rules according to the network policies. In this scenario, the frame rate and/or GOP sequence in the media unit information comes from the AF, and the indication information in the media unit information comes from the PCF.

In some embodiments, the request information sent by the AF may also include the indication information. In this case, both the frame rate and/or GOP included in the media unit information and the indication information may come from the AF.

In Step 804, the PCF sends the request information /PCC rules to the SMF.

In some embodiments, the request information is sent by the AF to the PCF, and the PCF sends the request information to the SMF.

The PCF may send the request information to the SMF through Npcf_SMPolicyControl_create. In some embodiments, the PCF may send the PCC rules to the SMF through Npcf_SMPolicyControl_UpdateNotify Request.

In Step 805, the SMF determines N4 rules based on local configuration or the PCC rules.

The N4 rules include one or more of downlink QoS Flow Identifier (QFI), PDR, and Forwarding Action Rules (FAR). The media unit information may be included in the PDR or may be included, as separate information, in the N4 rules.

In some embodiments, the indication information in the media unit information may also be determined by the SMF according to the local configuration and added into the N4 rule as the media unit information.

In Step 806, the SMF sends the N4 rules to the UPF.

The SMF may send the N4 rules to the UPF through N4_session establishment or modification message.

In Step 807, the UPF receives the first data stream corresponding to the QFI, and performs packet detection according to the media unit information in the N4 rules.

The packet detection may be performed by means of any one of the first implementation to the sixth implementation.

When the UPF determines each media unit (including one or more data packets), the second data stream may be obtained by adding the first information into the media unit of the first data stream.

In Step 808, the UPF sends the second data stream obtained by adding the first information to the access network device. The access network device determines media units based on the received data packet into which the first information has been added, to perform statistics and resource scheduling on the media units.

In the above method, by performing the packet detection by the UPF, it may be determined the media units to which the data packets belong, and the first information is added to the data packet header, such that the access network device may recognize the media units, which may avoid a problem such as packet loss when the terminal device is moving. Further, by recognizing the media units to which the data packets belongs, it can perform resource scheduling and statistical assessment based on the granularity of the media units, which can ensure reliability of the media units.

Referring to FIG. 9, a schematic flow diagram of a communication method according to Embodiment II of the present disclosure is provided. In this method, an example is taken where the UPF performs packet detection on the same media unit, and next, the access network device performs resource scheduling on each media unit. This method takes an example that the access network device detects the data packets belonging to the same media unit, and determines, based on the detection method, the media unit to which the data packets belong to perform resource scheduling or assessment. Specific processes are as follows.

Steps 901 to 904 can refer to Steps 801to 804, which are not to be described in detail here.

In Step 905, the SMF sends information including the media unit information to the AMF by calling Namf_Communication_N1N2MessageTransfer.

In Step 906, the AMF forwards the media unit information to the access network device via an N2 message.

In Step 907, in response to the access network device receiving the first data stream corresponding to the QFI, the access network device performs packet detection according to the media unit information.

The packet detection may be performed by means of any one of the first implementation to the sixth implementation.

The access network device performs statistics and resource scheduling on the media units determined by means of detection.

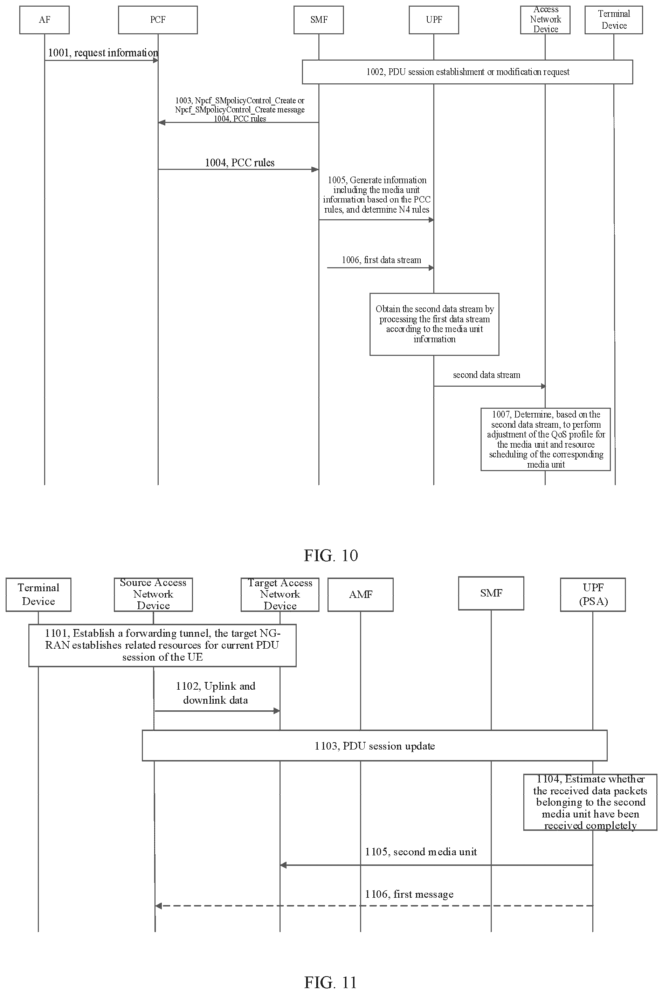

Referring to FIG. 10, a schematic flow diagram of a communication method according to Embodiment III of the present disclosure is provided. This method takes an example that the UPF detects the data packets belonging to the same media unit, and then the access network device performs resource scheduling on each media unit. Based on the AF request or network policies, the PCF configures detection requirements and QoS information to the UPF by means of the SMF.

In Step 1001, the AF sends the request information to the NEF/PCF.

For example, the AF may send the request information to the NEF by calling Nnef_AFsessionWithQoS_Create or Nnef_AFsessionWithQoS_Update. Alternatively, the AF may send the request information to the PCF by calling Npcf_PolicyAuthorization_Create or Npcf_PolicyAuthorization_Update.

The request information may include an indication identifier and QoS information corresponding to the indication identifier, where the indication identifier is configured for indicating to which media unit the QoS information is applied. Relevant description of the QoS is seen as previously mentioned, and thus is omitted here.

Alternatively, the AF may add a flag to a header of a data packet transmitted on the user plane. The indication identifier and the QoS information may be included in the media unit information. The media unit information is included in the request information.

The QoS information may be one or more of PER, delay, priority level, jitter, or 5QI.

The request information may also include information such as the frame rate and/or the GOP. Alternatively, the information such as the frame rate and/or the GOP may be included in the media unit information (application unit). The application unit is included in the request information.

In some embodiments, the request information may also include indication information indicative of detecting data flow characteristics to encapsulate the first information.

In Step 1002, the terminal device sends a PDU session establishment or modification request to the SMF.

In Step 1003, in response to receiving the PDU session establishment or modification request from the terminal device, the SMF may send Npcf_SMpolicyControl_Create or Npcf_SMpolicyControl_Create message to the PCF.

If the SMF receives the PDU session establishment request, the PCF may determine, according to information such as S-NSSAI or DNN, the PDU session established used for transmission of the XR services.

In some embodiments, the PCF may also determine, according to the network policies or application layer requirements (request information sent by the AF), that the media unit needs to be processed. The PCF generates PCC rules based on the network policies or AF request, where the PCC rules may include the media unit information.

In some embodiments, neither the indication identifier in the media unit information nor the QoS information corresponding to the indication identifier is included in the request information sent by the AF. The PCF may add the indication identifier and the QoS information corresponding to the indication identifier into the PCC rules according to the network policies. In this scenario, the indication identifier in the media unit information and the QoS information corresponding to the indication identifier come from the PCF.

In some embodiments, the request information sent by the AF may also include the indication identifier and the QoS profile corresponding to the indication identifier. In this case, the indication identifier included in the media unit information and the QoS profile corresponding to the indication identifier both come from the AF.

In Step 1004, the PCF delivers the PCC rules to the SMF.

In Step 1005, the SMF generates information including the media unit information (the indication identifier and the QoS information (serving as the QoS profile)) based on the PCC rules and sends it to the UPF. Or the SMF determines, based on the QoS information in the PCC rules, the QoS profile such as 5QI and Packet Delay Budget (PDB). For example, the PDB is determined according to a requested delay parameter. The SMF generates information including the indication identifier and the corresponding QoS profile, and sends the information to the UPF. The indication identifier and the corresponding QoS profile are included in the media unit information.

It should be noted that the information in the QoS profile may totally come from the AF, or partly come from the AF and partly come from the SMF, or totally come from the SMF, or partly come from the AF and partly come from the PCF.

In Step 1006, the UPF receives the first data stream corresponding to the QFI, and obtains the second data stream by processing the first data stream according to the media unit information.

Specifically, packet detection may be performed by any one of the first implementation to the sixth implementation. When the UPF determines each media unit (including one or more data packets), the first information may be added into the media unit of the first data stream.

The UPF determines a media unit to be processed according to the indication identifier, and sends the QoS profile of the media unit to be processed to the access network device. Specifically, the QoS profile is added/modified into GPRS-GTP-U packet headers or IP layer packet headers of all the data packets in the media unit. On this basis, in addition to adding the first information into the media unit of the first data stream, the UPF may also obtain the second data stream by adding the QoS profile into some identified media units.

For example, the QoS profile includes 5QI and has a value of 3. In this case, the 5QI with a value of 3 is configured locally on the access network device. For another example, if the QoS profile includes PER (PER=10⁻⁶), the QoS profile added in the media unit is PER=10⁻⁶. In some embodiments, the UPF may configure different QoS profiles for different media units transmitted on the same QoS flow (for example, different ADUs correspond to different 5QIs).

In Step 1007, based on receiving the second data stream, the access network device determines to perform adjustment of the QoS profile for the media unit and resource scheduling of the corresponding media unit.

At present, the 5G network supports two handover modes: Xn handover and N2 handover. After a source access network device that resides (or accesses) before handover of the terminal device determines a target access network device, it is first determined whether an Xn connection exists. If the XN connection does not exist, the N2 switchover is used. The handover process between Xn and N2 may be divided into a preparation phase and an execution phase. The preparation phase includes: 1) establishing a forwarding tunnel between the source access network device and the target access network device; and 2) establishing, by the target access network device, related resources for the current PDU session. The execution phase includes: 1) indicating, by the source access network device, the terminal device to access the target access network device; and 2) completing establishment of relevant context by the core network element. One media unit is comprised of a plurality of data packets, and each media unit may have a large data volume. When the terminal device is moving in the event of handover of the access network device, a problem of failure of decoding or use of the receiving terminal may be caused if all the data packets of all the same media units cannot be received. On this basis, by means of the packet detection mechanism provided in the embodiments of the present disclosure, the data packets belonging to the same media unit can be recognized, such that complete media units may be transmitted, thereby preventing the problem of decoding or use of the receiving terminal.

Referring to FIG. 11, a schematic flow diagram of a communication method according to Embodiment IV of the present disclosure is provided. In this method, the UPF performs packet detection to determine whether each media unit has been received. After the UPF determines that each media unit has been received, complete uplink or downlink media units are sent to the DN or target access network device to avoid packet loss in the media units during the handover process. In FIG. 11, an example is taken where handover between the source access network device and the target access network device is implemented based on an Xn interface. Specific processes are as follows.

In Step 1101, handover preparation: a forwarding tunnel is established between the source access network device and the target access network device, and the target access network device establishes related resources for current PDU session of the terminal device.

The specific establishment of the forwarding tunnel and of the related resources can refer to the existing protocols, which is not to be described in detail in the present disclosure.

In Step 1102, the source access network device forwards the received uplink and downlink data to the target access network device.

In Step 1103, PDU session update is performed.

The process of the PDU session update can refer to the existing protocols for , which is not to be described in detail in the present disclosure.

In Step 1104, the UPF (an anchor UPF, which may be referred to as a PDU session anchor (PSA)) estimates whether the received data packets belonging to the second media unit have been received completely.

The second media unit is a first media unit belonging to the terminal device that is received by the UPF after the PDU session update is completed. Methods of estimating, by the UPF, whether the data packets belonging to the second media unit have been received completely may be performed by any one of the first implementation to the sixth implementation, which are not to be described in detail here.

In Step 1105, the UPF determines that the data packets belonging to the second media unit have been received completely, and the UPF sends the second media unit to the target access network device.

Alternatively, in Step 1106, the UPF sends a first message to the source access network device, where the first message is configured for indicating the source network device to disconnect a tunneling connection from the target network device accessed after the handover of the first terminal device. The first message may be an N3 End marker.

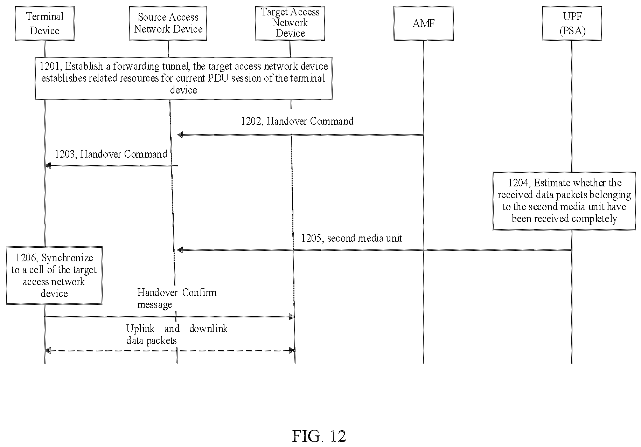

Referring to FIG. 12, a schematic flow diagram of a communication method according to Embodiment V of the present disclosure is provided. In this method, the UPF performs packet detection to determine whether each media unit has been received. After the UPF determines that each media unit has been received, the complete uplink or downlink media units are sent to the DN or target access network device to avoid packet loss in the media units during the handover process. In FIG. 12, an example is taken where handover between the source access network device and the target access network device is implemented based on an N2 interface. Specific processes are as follows.

In Step 1201, a forwarding tunnel is established between the source access network device and the target access network device, and the target access network device establishes related resources for current PDU session of the terminal device.

The specific establishment of the forwarding tunnel and of the related resources can refer to the existing protocols, which is not to be described in detail in the present disclosure.

In Step 1202, the AMF sends a Handover Command to the source access network device.

In Step 1203, the source access network device triggers the handover process by sending the Handover Command to the terminal device.

In Step 1204, the UPF (PSA) estimates whether the received data packets belonging to the second media unit have been received completely.

The second media unit is a first media unit belonging to the terminal device that is received by the UPF after the PDU session update is completed. Methods of estimating, by the UPF, whether the data packets belonging to the second media unit have been received completely may be performed by any one of the first implementation to the sixth implementation, which are not to be described in detail here.

Specifically, the manners of obtaining the media unit information by the UPF can refer to the manners described in any one of the above Embodiments I to IV, which are not to be described in detail here.

In Step 1205, the UPF determines that the data packets belonging to the second media unit have been received completely, and the UPF sends the second media unit to the source access network device. Afterwards, the UPF does not send any downlink data packet to the source access network device.

In some embodiments, the source access network device sends the received second media unit to the target access network device by means of direct data forwarding, or first sends the second media unit to a source UPF by means of indirect data forwarding, and then the second media unit is forwarded to the target access network device by the source UPF and a target UPF.

In Step 1206, after the terminal device synchronizes to a cell of the target access network device, a Handover Confirm message is sent to the target access network device. Afterwards, the target access network device sends downlink data stream to the terminal device and receives uplink data stream sent from the terminal device.

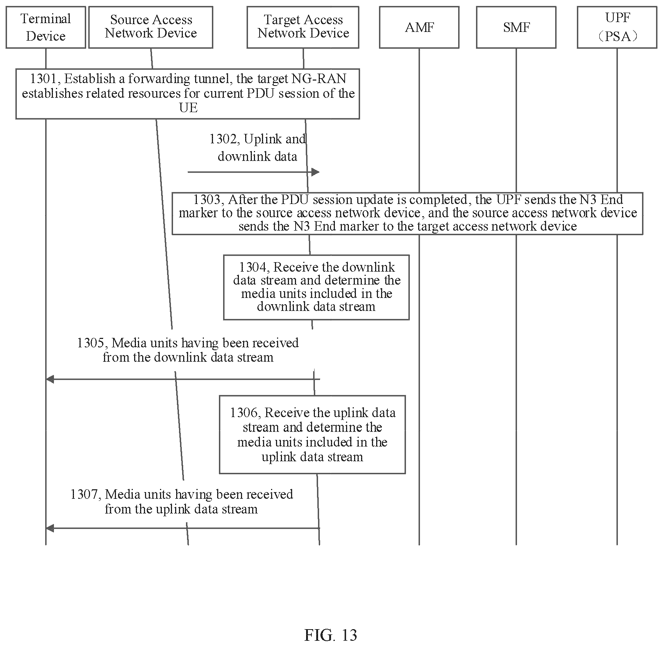

Referring to FIG. 13, a schematic flow diagram of a communication method according to Embodiment VI of the present disclosure is provided. In this method, the target access network device determines whether each media unit has been received. When the target access network device determines that each media unit has been received, the complete uplink or downlink media unit is sent to the terminal device to avoid packet loss in the media unit during the handover process. In FIG. 13, an example is taken where handover between the source access network device and the target access network device is implemented based on the Xn interface. Specific processes are as follows.

Step 1301 can refer to Step 1101, which is not to be described in detail here.

In Step 1302, the source access network device forwards the received uplink and downlink data stream to the target access network device.

In Step 1303, after the PDU session update is completed, the UPF sends the N3 End marker to the source access network device, and the source access network device sends the N3 End marker to the target access network device. The source access network device no longer receives any downlink data packet.

In Step 1304, the target access network device receives the downlink data stream and determines the media units included in the downlink data stream.

The target access network device may determine, based on any one of the first implementation to the sixth implementation, the media units included in the downlink data stream. The media units included in the downlink data stream may also be determined by means of the first information added, by the UPF (PSA), into the downlink data stream.

In Step 1305, the target access network device sends, to the terminal device, the media units having been received from the downlink data stream.

In Step 1306, the target access network device receives the uplink data stream and determines the media units included in the uplink data stream.

The target access network device may determine, based on any one of the first implementation to the sixth implementation, the media units included in the uplink data stream. The media units included in the uplink data stream may also be determined by means of the first information added, by the UPF (PSA), into the uplink data stream.

In Step 1307, the target access network device sends, to the terminal device, the media units having been received from the uplink data stream.

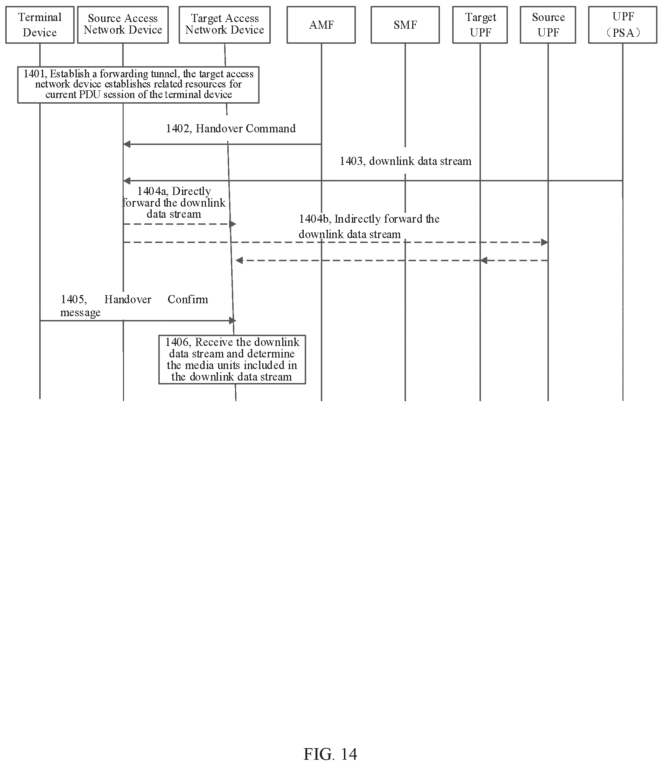

Referring to FIG. 14, a schematic flow diagram of a communication method according to Embodiment VII of the present disclosure is provided. In this method, the target access network device determines whether each media unit has been received. When the target access network device determines that each media unit has been received, the complete uplink or downlink media unit is sent to the terminal device to avoid packet loss in the media unit during the handover process. In FIG. 14, an example is taken where handover between the source access network device and the target access network device is implemented based on the N2 interface. Specific processes are as follows.

Steps 1401 to 1402 can refer to Steps 1201 to 1202, which are not to be described in detail here.

In Step 1403, the UPF (PSA) sends the downlink data stream to the source access network device.

In some embodiments, in Step 1404a, the source access network device sends the received downlink data stream to the target access network device by means of direct data forwarding. Alternatively, in Step 1404b, the source access network device first sends the downlink data stream to the source UPF by means of indirect data forwarding, and then the downlink data stream is forwarded to the target access network device by way of the source UPF and the target UPF.

In Step 1405, after the terminal device synchronizes to a cell of the target access network device, a Handover Confirm message is sent to the target access network device.

In Step 1406, the target access network device receives the downlink data stream and determines the media units included in the downlink data stream.

The target access network device may determine, based on any one of the first implementation to the sixth implementation, the media units included in the downlink data stream. The media units included in the downlink data stream may also be determined by means of the first information added, by the UPF (PSA), into the downlink data stream.

In some embodiments, the target access network device may also determine, based on any one of the first implementation to the sixth implementation, the media units included in the uplink data stream, and then performs resource scheduling, etc.

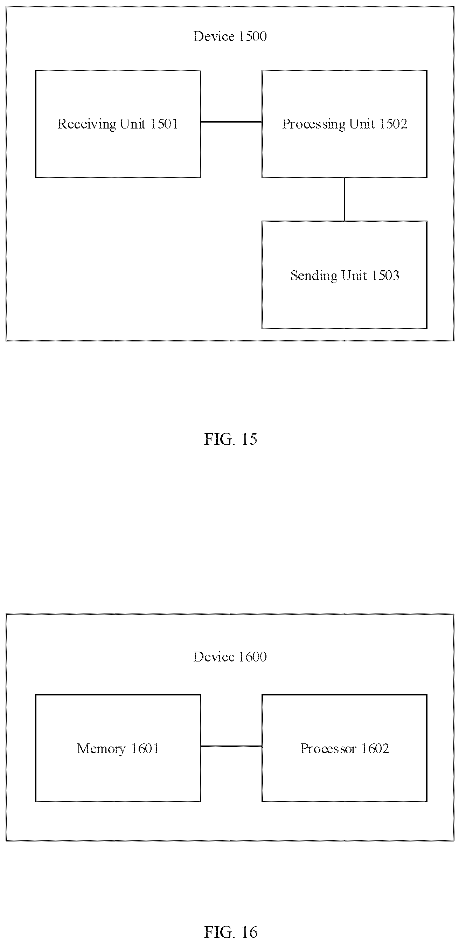

Based on the same technical idea, the embodiments of the present disclosure provide a communication device1500, as shown in FIG. 15. The device 1500 can perform each of the steps in the above method, which are not to be described in detail here to avoid repetition. The device 1500 includes a receiving unit 1501, a processing unit 1502, and a sending unit 1503.

The receiving unit 1501 is configured to receive a first data stream comprising at least one media unit, where each of the at least one media unit comprises one or more data packets.

The processing unit 1502 is configured to add first information into at least one media unit in the first data stream according to media unit information, and/or obtain a second data stream by adding or modifying a quality of service (QoS) profile. The first information comprises identification information configured for identifying a data packet belonging to a first media unit, where the first media unit is any one of the at least one media unit; The communication device is an access network device or a user plane function (UPF); The first information and/or QoS profile may be used for performing resource scheduling on the media unit.

In some embodiments, the media unit is any one of a data frame, an application data unit (ADU), a group of pictures (GOP), a slice, a tile, or a slice segment (SS).

In some embodiments, the first information also includes number information configured for indicating number of the data packets included in the first media unit.

In some embodiments, the media unit information comprises an identifier indicative of adding the first information to the first media unit, and/or, adding or modifying the QoS profile.

In some embodiments, the media unit information also includes first information corresponding to the first media unit and/or the QoS profile.

In some embodiments, the receiving unit 1501 is also configured to receive the media unit information from an application function (AF) network element, a session management function (SMF) network element, or a policy control function (PCF) network element.

In some embodiments, the communication device 1500 is an access network device, and the receiving unit 1501 is also configured to receive the media unit information from the user plane function (UPF).

In some embodiments, the communication device 1500 is a user plane function network element, the first data stream belongs to a first terminal device, and the communication device also includes: a sending unit 1503 configured to send, based on completing update of a protocol data unit (PDU) session in a handover process of the first terminal device and completing acquisition of a data packet belonging to a second media unit, the second media unit to a target network device accessed after handover of the first terminal device, the second media unit being a first media unit in the first data stream belonging to the first terminal device received by the receiving unit after the PDU session is updated.

In some embodiments, the sending unit 1503 is also configured to send a first message to a source network device accessed before the handover of the first terminal device, where the first message is configured for indicating the source network device to disconnect a tunneling connection from the target network device accessed after the handover of the first terminal device.

In some embodiments, the communication device 1500 is a user plane function network element, the first data stream belongs to the first terminal device, and the communication device 1500 also includes: the sending unit 1503 configured to send, based on completing update of a protocol data unit (PDU) session in a handover process of the first terminal device and completing acquisition of a data packet belonging to a third media unit, the third media unit to a source network device accessed before handover of the first terminal device. The third media unit is a last media unit in the first data stream belonging to the first terminal device received by a receiving unit before the PDU session is updated; After the receiving unit 1501 obtains a data packet belonging to a fourth media unit, the sending unit 1503 sends the fourth media unit to a target network device accessed after the handover of the first terminal device. The fourth media unit is a next media unit adjacent to the third media unit.

In some embodiments, the receiving unit 1501 is also configured to receive a detection rule of a media unit. The processing unit 1502 is also configured to determine the data packet belonging to the first media unit in the first data stream according to the detection rule of the media unit.

In some embodiments, the detection rule comprises a frame rate, and the processing unit 1502 is configured to determine, in response to determining the data packet belonging to the first media unit in the first data stream according to the detection rule of the media unit, a frame interval according to the frame rate, and to determine a boundary of the first media unit within a duration corresponding to the frame interval. A time interval between a last data packet in the first media unit and a first data packet included in a fifth media unit is greater than a time interval between any two data packets included in the first media unit, where the fifth media unit is a next media unit adjacent to the first media unit in the first data stream.

In some embodiments, the processing unit 1502 is also configured to determine that M consecutive data packets in the first data stream belong to the first media unit, where the first media unit is a media unit detected in the first data stream, and the M is an integer greater than or equal to 1. A data volume of a last data packet in the M consecutive data packets is less than a maximum transfer unit (MTU) capacity, and data volumes of data packets other than the last data packet among the M consecutive data packets are equal to the MTU capacity.

In some embodiments, the media unit comprises a data frame, an ADU or a GOP; the media unit comprises one or more coding units; and each of the one or more coding units is any one of the slice, the SS or the tile; The processing unit 1502 is also configured to determine that N consecutive data packets in the first data stream belong to the same coding unit, where the N is a positive integer greater than or equal to 1. A data volume of a last data packet in the N consecutive data packets is less than a maximum transfer unit (MTU) capacity, and data volumes of data packets other than the last data packet among the N consecutive data packets are equal to the MTU capacity.

In some embodiments, the detection rule at least includes a frame rate, and the processing unit 1502 is configured to determine, in response to determining the data packets belonging to the first media unit in the first data stream according to the detection rule, that K consecutive data packets in the first data stream belong to the first media unit according to the detection rule, where the K is an integer greater than or equal to 1. A data volume of one of the K consecutive data packets is less than data volumes of the other (K-1) data packets, and a receiving duration of the K consecutive data packets is less than or equal to a frame interval determined according to the frame rate.

In some embodiments, the communication device 1500 is a user plane function network element, and the processing unit 1502 is also configured to determine data packets belonging to the same media unit according to an identifier of an IP layer packet header in a data packet included in the first data stream, or determine the data packets belonging to the same media unit in the first data stream according to a deep packet inspection (DPI) algorithm.

In some embodiments, in response to adding first information into at least one media unit in the first data stream, the processing unit 1502 is configured to: add the first information into each data packet of the first media unit; or add the first information into a first data packet of the first media unit; or add the first information into a last data packet of the first media unit; or add the first information into the first data packet and the last data packet of the first media unit.

In some embodiments, the first information is added into a General Packet Radio Service (GPRS) Tunneling Protocol (GTP-U) packet header or an Internet Protocol (IP) layer packet header of a user plane of the data packet.

Based on the same technical idea, the embodiments of the present disclosure provide a communication device1600, as shown in FIG. 16. The device 1600 can perform each of the steps in the above method, which are not to be described in detail here to avoid repetition. The device 1600 includes a memory 1601 and a processor 1602.

The memory 1601 is configured to store a program instruction.

The processor 1602 is configured to call the program instruction stored in the memory, and based on the program instruction, the processor 1602 is configured to: receive a first data stream comprising at least one media unit, each of the at least one media unit comprising one or more data packets; add first information into at least one media unit in the first data stream according to media unit information, and/or obtain a second data stream by adding or modifying a quality of service (QoS) profile, the first information comprising identification information configured for identifying a data packet belonging to a first media unit, and the first media unit being any one of the at least one media unit; The communication device is an access network device or a user plane function (UPF).

In some embodiments, the media unit is any one of a data frame, an application data unit (ADU), a group of pictures (GOP), a slice, a tile, or a slice segment (SS).

In some embodiments, the first information also includes number information configured for indicating number of the data packets included in the first media unit.

In some embodiments, the media unit information comprises an identifier indicative of adding the first information to the first media unit, and/or, adding or modifying the QoS profile.

In some embodiments, the media unit information also includes first information corresponding to the first media unit and/or the QoS profile.

In some embodiments, the processor 1602 is also configured to obtain the media unit information from an application function (AF) network element, a session management function (SMF) network element, or a policy control function (PCF) network element.

In some embodiments, the communication device is an access network device, and the processor 1602 is also configured to obtain the media unit information from the user plane function (UPF).

In some embodiments, the communication device is a user plane function network element, the first data stream belongs to a first terminal device, and the processor 1602 is also configured to send, based on completing update of a protocol data unit (PDU) session in a handover process of the first terminal device and completing acquisition of a data packet belonging to a second media unit, the second media unit to a target network device accessed after handover of the first terminal device, where the second media unit is a first media unit in the first data stream belonging to the first terminal device received by the processor after the PDU session is updated.

In some embodiments, the processor 1602 is also configured to send a first message to a source network device accessed before the handover of the first terminal device, the first message being configured for indicating the source network device to disconnect a tunneling connection from the target network device accessed after the handover of the first terminal device.

In some embodiments, the communication device is a user plane function network element, the first data stream belongs to a first terminal device, and the processor 1602 is also configured to send, based on completing update of a protocol data unit (PDU) session in a handover process of the first terminal device and completing acquisition of a data packet belonging to a third media unit, the third media unit to a source network device accessed before handover of the first terminal device, the third media unit being a last media unit in the first data stream belonging to the first terminal device received by the processor before the PDU session is updated; and send, after the receiving unit obtains a data packet belonging to a fourth media unit, the fourth media unit to a target network device accessed after the handover of the first terminal device, the fourth media unit being a next media unit adjacent to the third media unit.

In some embodiments, the processor 1602 is also configured to obtain a detection rule of a media unit; and determine the data packet belonging to the first media unit in the first data stream according to the detection rule of the media unit.

In some embodiments, the detection rule comprises a frame rate, and in response to determining the data packet belonging to the first media unit in the first data stream according to the detection rule of the media unit, the processor 1602 is configured to determine a frame interval according to the frame rate, and determine a boundary of the first media unit within a duration corresponding to the frame interval; wherein a time interval between a last data packet in the first media unit and a first data packet included in a fifth media unit is greater than a time interval between any two data packets included in the first media unit, where the fifth media unit is a next media unit adjacent to the first media unit in the first data stream.

In some embodiments, the processor 1602 is also configured to determine that M consecutive data packets in the first data stream belong to the first media unit, the first media unit being a media unit detected in the first data stream, and the M being an integer greater than or equal to 1; wherein a data volume of a last data packet in the M consecutive data packets is less than a maximum transfer unit (MTU) capacity, and data volumes of data packets other than the last data packet among the M consecutive data packets are equal to the MTU capacity.

In some embodiments, the media unit comprises a data frame, an ADU or a GOP; the media unit comprises one or more coding units; and each of the one or more coding units is any one of the slice, the SS or the tile.

The processor 1602 is also configured to determine that N consecutive data packets in the first data stream belong to the same coding unit, where the N is a positive integer greater than or equal to 1; wherein a data volume of a last data packet in the N consecutive data packets is less than a maximum transfer unit (MTU) capacity, and data volumes of data packets other than the last data packet among the N consecutive data packets are equal to the MTU capacity.

In some embodiments, the detection rule comprises a frame rate, and in response to determining the data packet belonging to the first media unit in the first data stream according to the detection rule of the media unit, the processor 1602 is configured to determine that K consecutive data packets in the first data stream belong to the first media unit according to the detection rule, where the K is an integer greater than or equal to 1; wherein a data volume of one of the K consecutive data packets is less than data volumes of the other (K-1) data packets, and a receiving duration of the K consecutive data packets is less than or equal to a frame interval determined according to the frame rate.

In some embodiments, the communication device is a user plane function network element, and the processor 1602 is also configured to determine data packets belonging to the same media unit according to an identifier of an IP layer packet header in a data packet included in the first data stream; or determine the data packets belonging to the same media unit in the first data stream according to a deep packet inspection (DPI) algorithm.

In some embodiments, in response to adding first information into at least one media unit in the first data stream, the processor 1602 is configured to: add the first information into each data packet of the first media unit; or add the first information into a first data packet of the first media unit; or add the first information into a last data packet of the first media unit; or add the first information into the first data packet and the last data packet of the first media unit.

In some embodiments, the first information is added into a General Packet Radio Service (GPRS) Tunneling Protocol (GTP-U) packet header or an Internet Protocol (IP) layer packet header of a user plane of the data packet.

In the embodiments of the present disclosure, the processor may be a general-purpose processor, a digital signal processor, an application-specific integrated circuit, a field programmable gate array or other programmable logic device, a discrete gate or transistor logic device, or a discrete hardware component, capable of implementing or executing the methods, steps and logic block diagrams disclosed in the embodiments of the present disclosure. The general-purpose processor may be a microprocessor or any conventional processor, etc. The steps of the methods disclosed in the embodiments of the present disclosure may be directly executed by a hardware processor, or may be executed by a combination of hardware and software modules in the processor.

In the embodiments of the present disclosure, the memory may be non-volatile memory such as hard disk drive (HDD) or solid-state drive (SSD), etc., or may be a volatile memory such as random-access memory (RAM). The memory may also be any other mediums that can be used to carry or store desired program codes in the form of instructions or data structures and can be accessed by a computer, but is not limited thereto. The memory in the embodiments of the present disclosure may also be a circuit or any other apparatus capable of performing a storage function for storing program instructions and/or data.

The embodiments of the present disclosure also provide a computer-readable storage medium, including a program code which, when running on the computer, is used to enable the computer to perform the steps of the method provided in the embodiments of the present disclosure.

Those skilled in the art should realize that the embodiments of the present disclosure may be provided as a method, a system or a computer program product. Therefore, the present disclosure may use forms of a full hardware embodiment, a full software embodiment, or an embodiment in combination of software and hardware aspects. Furthermore, the present disclosure may use forms of computer program products implemented on one or more computer storage media (including but not limited to a magnetic disk memory, a CD-ROM, an optical memory or the like) which includes a computer program code.

The present disclosure is described with reference to flowcharts and/or block diagrams of the method in the embodiments of the present disclosure, the device (system) and the computer program product. It is to be understood that each flow and/or block in the flowchart and/or block diagram as well as combination of flow and/or block in the flowchart and/or block diagram may be realized by computer program instructions. These computer program instructions may be provided for a general-purpose computer, a special-purpose computer, an embedded processor or processors of other programmable data processing devices to generate a machine, to generate an apparatus configured to implement designated functions in one or more flows of a flowchart and/or one or more blocks of a block diagram by means of instructions executed by a computer or a processor of other programmable data processing devices.

These computer program instructions may also be stored in a computer-readable memory that can guide a computer or other programmable data processing devices to work in a particular way, such that the instructions stored in the computer-readable memory generate a manufactured product including a command device that implements the designated functions in one or more flows of a flowchart and/or one or more blocks of a block diagram.

These computer program instructions may also be loaded onto computers or other programmable data processing devices such that a series of operation steps are executed on the computers or other programmable devices to generate a processing achieved by the computers, thus providing steps for achieving functions designated in one or more flows of the flowchart and/or in one or more blocks of the block diagram by means of instructions executed by the computers or other programmable devices.

Although preferred embodiments of the present disclosure have been described, those skilled in the art may make additional alterations and modifications to these embodiments once they learn about basic creative concepts. Therefore, the appended claims are intended to be interpreted as comprising the preferred embodiments and all the alterations and modifications falling within the scope of the present disclosure.

Obviously, persons skilled in the art may make various alterations and variations to the present disclosure without deviating from the scope of the present disclosure. Thus, if these alterations and variations of the present disclosure fall within the scope of the claims of the present disclosure and equivalent technologies thereof, the present disclosure is intended to cover these alterations and variations.

## Claims

1. A communication method, comprising:
receiving a first data stream by a first network device, the first data stream comprising at least one media unit, each of the at least one media unit comprising one or more data packets;
adding, by the first network device, first information into at least one media unit in the first data stream according to media unit information, and/or obtaining a second data stream by adding or modifying a quality of service (QoS) profile; the first information comprising identification information configured for identifying a data packet belonging to a first media unit, and the first media unit being any one of the at least one media unit;
wherein the first network device is an access network device or a user plane function (UPF).

2. The method according to claim 1, wherein the media unit is any one of a data frame, an application data unit (ADU), a group of pictures (GOP), a slice, a tile, or a slice segment (SS).

3. The method according to claim 1, wherein the first information further comprises number information configured for indicating number of the data packets included in the first media unit.

4. The method according to claim 1, wherein the media unit information comprises an identifier indicative of adding the first information to the first media unit, and/or, adding or modifying the QoS profile.

5. The method according to claim 4, wherein the media unit information further comprises first information corresponding to the first media unit and/or the QoS profile.

6. The method according to any one of claims 1 to 5 further comprising:
obtaining the media unit information by the first network device from an application function (AF) network element, a session management function (SMF) network element, or a policy control function (PCF) network element.

7. The method according to any one of claims 1 to 5, wherein the first network device is an access network device, and the method further comprises:
obtaining the media unit information by the first network device from the user plane function (UPF).

8. The method according to any one of claims 1 to 5, wherein the first network device is a user plane function network element, and the first data stream belongs to a first terminal device; and
the method further comprises:
based on the first network device completing update of a protocol data unit (PDU) session in a handover process of the first terminal device and completing acquisition of a data packet belonging to a second media unit, sending the second media unit to a target network device accessed after handover of the first terminal device, the second media unit being a first media unit in the first data stream belonging to the first terminal device received by the first network device after the PDU session is updated.

9. The method according to claim 8, further comprising:
sending, by the first network device, a first message to a source network device accessed before the handover of the first terminal device, the first message being configured for indicating the source network device to disconnect a tunneling connection from the target network device accessed after the handover of the first terminal device.

10. The method according to any one of claims 1 to 5, wherein the first network device is a user plane function network element, and the first data stream belongs to a first terminal device; and
the method further comprises:
based on the first network device completing update of a protocol data unit (PDU) session in a handover process of the first terminal device and completing acquisition of a data packet belonging to a third media unit, sending the third media unit to a source network device accessed before handover of the first terminal device, the third media unit being a last media unit in the first data stream belonging to the first terminal device received by the first network device before the PDU session is updated; and
sending, after obtaining a data packet belonging to a fourth media unit, the fourth media unit to a target network device accessed after the handover of the first terminal device, the fourth media unit being a next media unit adjacent to the third media unit.

11. The method according to any one of claims 1 to 5, further comprising:
obtaining, by the first network device, a detection rule of the media unit; and
determining, by the first network device, the data packet belonging to the first media unit in the first data stream according to the detection rule of the media unit.

12. The method according to claim 11, wherein the detection rule comprises a frame rate, and the determining the data packet belonging to the first media unit in the first data stream according to the detection rule of the media unit comprises:
determining, by the first network device, a frame interval according to the frame rate, and determining a boundary of the first media unit within a duration corresponding to the frame interval;
wherein a time interval between a last data packet in the first media unit and a first data packet included in a fifth media unit is greater than a time interval between any two data packets included in the first media unit, the fifth media unit being a next media unit adjacent to the first media unit in the first data stream.

13. The method according to any one of claims 1 to 5, further comprising:
determining, by the first network device, that M consecutive data packets in the first data stream belong to the first media unit, the first media unit being a media unit detected in the first data stream, and the M being an integer greater than or equal to 1;
wherein a data volume of a last data packet in the M consecutive data packets is less than a maximum transfer unit (MTU) capacity, and data volumes of data packets other than the last data packet among the M consecutive data packets are equal to the MTU capacity.

14. The method according to any one of claims 1 to 5, wherein the media unit comprises a data frame, an ADU or a GOP, the media unit comprises one or more coding units, and each of the one or more coding units is any one of the slice, the SS or the tile; and
the method further comprises:
determining, by the first network device, that N consecutive data packets in the first data stream belong to the same coding unit, the N being a positive integer greater than or equal to 1;
wherein a data volume of a last data packet in the N consecutive data packets is less than a maximum transfer unit (MTU) capacity, and data volumes of data packets other than the last data packet among the N consecutive data packets are equal to the MTU capacity.

15. The method according to claim 11, wherein the detection rule at least comprises a frame rate, and the determining, by the first network device, the data packet belonging to the first media unit in the first data stream according to the detection rule comprises:
determining, by the first network device, that K consecutive data packets in the first data stream belong to the first media unit according to the detection rule, the K being an integer greater than or equal to 1;
wherein a data volume of one of the K consecutive data packets is less than data volumes of the other (K-1) data packets, and a receiving duration of the K consecutive data packets is less than or equal to a frame interval determined according to the frame rate.

16. The method according to any one of claims 1 to 5, wherein the first network device is a user plane function network element, and the method further comprises:
determining, by the first network device, data packets belonging to the same media unit according to an identifier of an IP layer packet header in a data packet included in the first data stream; or,
determining, by the first network device, the data packets belonging to the same media unit in the first data stream according to a deep packet inspection (DPI) algorithm.

17. The method according to any one of claims 1 to 5, wherein the adding first information into at least one media unit in the first data stream comprises:
adding the first information into each data packet of the first media unit; or
adding the first information into a first data packet of the first media unit; or
adding the first information into a last data packet of the first media unit; or
adding the first information into the first data packet and the last data packet of the first media unit.

18. The communication device according to claim 17, wherein the first information is added into a General Packet Radio Service (GPRS) Tunneling Protocol (GTP-U) packet header or an Internet Protocol (IP) layer packet header of a user plane of the data packet.

19. A communication device, comprising:
a receiving unit configured to receive a first data stream comprising at least one media unit, each of the at least one media unit comprising one or more data packets;
a processing unit configured to add first information into at least one media unit in the first data stream according to media unit information, and/or obtain a second data stream by adding or modifying a quality of service (QoS) profile, the first information comprising identification information configured for identifying a data packet belonging to a first media unit, and the first media unit being any one of the at least one media unit;
the communication device is an access network device or a user plane function (UPF).

20. The communication device according to claim 19, wherein the media unit is any one of a data frame, an application data unit (ADU), a group of pictures (GOP), a slice, a tile, or a slice segment (SS).

21. The communication device according to claim 19, wherein the first information further comprises number information configured for indicating number of the data packets included in the first media unit.

22. The communication device according to claim 19, wherein the media unit information comprises an identifier indicative of adding the first information to the first media unit, and/or, adding or modifying the QoS profile.

23. The communication device according to claim 22, wherein the media unit information further comprises first information corresponding to the first media unit and/or the QoS profile.

24. The communication device according to any one of claims 19 to 23, wherein the receiving unit is further configured to:
obtain the media unit information from an application function (AF) network element, a session management function (SMF) network element, or a policy control function (PCF) network element.

25. The communication device according to any one of claims 19 to 23, wherein the communication device is an access network device, and the receiving unit is further configured to:
obtain the media unit information from the user plane function (UPF).

26. The communication device according to any one of claims 19 to 23, wherein the communication device is a user plane function network element, the first data stream belongs to a first terminal device, and the communication device further comprises:
a sending unit configured to send, based on completing update of a protocol data unit (PDU) session in a handover process of the first terminal device and completing acquisition of a data packet belonging to a second media unit, the second media unit to a target network device accessed after handover of the first terminal device, the second media unit being a first media unit in the first data stream belonging to the first terminal device received by the receiving unit after the PDU session is updated.

27. The communication device according to claim 26, wherein the sending unit is further configured to:
send a first message to a source network device accessed before the handover of the first terminal device, the first message being configured for indicating the source network device to disconnect a tunneling connection from the target network device accessed after the handover of the first terminal device.

28. The communication device according to any one of claims 19 to 23, wherein the communication device is a user plane function network element, the first data stream belongs to a first terminal device, and the communication device further comprises:
the sending unit configured to send, based on completing update of a protocol data unit (PDU) session in a handover process of the first terminal device and completing acquisition of a data packet belonging to a third media unit, the third media unit to a source network device accessed before handover of the first terminal device, the third media unit being a last media unit in the first data stream belonging to the first terminal device received by the receiving unit before the PDU session is updated; wherein
after the receiving unit obtains a data packet belonging to a fourth media unit, the sending unit is configured to send the fourth media unit to a target network device accessed after the handover of the first terminal device, the fourth media unit being a next media unit adjacent to the third media unit.

29. The communication device according to any one of claims 19 to 23, wherein the receiving unit is further configured to receive a detection rule of the media unit; and
the processing unit is further configured to determine the data packet belonging to the first media unit in the first data stream according to the detection rule of the media unit.

30. The communication device according to claim 29, wherein the detection rule comprises a frame rate, and in response to determining the data packet belonging to the first media unit in the first data stream according to the detection rule of the media unit, the processing unit is configured to:
determine a frame interval according to the frame rate, and determine a boundary of the first media unit within a duration corresponding to the frame interval;
wherein a time interval between a last data packet in the first media unit and a first data packet included in a fifth media unit is greater than a time interval between any two data packets included in the first media unit, the fifth media unit being a next media unit adjacent to the first media unit in the first data stream.

31. The communication device according to any one of claims 19 to 23, wherein the processing unit is further configured to:
determine that M consecutive data packets in the first data stream belong to the first media unit, the first media unit being a media unit detected in the first data stream, and the M being an integer greater than or equal to 1;
wherein a data volume of a last data packet in the M consecutive data packets is less than a maximum transfer unit (MTU) capacity, and data volumes of data packets other than the last data packet among the M consecutive data packets are equal to the MTU capacity.

32. The communication device according to any one of claims 19 to 23, wherein the media unit comprises a data frame, an ADU or a GOP, the media unit comprises one or more coding units, and each of the one or more coding units is any one of the slice, the SS or the tile;
the processing unit is further configured to determine that N consecutive data packets in the first data stream belong to the same coding unit, the N being a positive integer greater than or equal to 1; and
wherein a data volume of a last data packet in the N consecutive data packets is less than a maximum transfer unit (MTU) capacity, and data volumes of data packets other than the last data packet among the N consecutive data packets are equal to the MTU capacity.

33. The communication device according to claim 29, wherein the detection rule at least comprises a frame rate, and in response to determining the data packet belonging to the first media unit in the first data stream according to the detection rule, the processing unit is configured to:
determine that K consecutive data packets in the first data stream belong to the first media unit according to the detection rule, the K being an integer greater than or equal to 1;
wherein a data volume of one of the K consecutive data packets is less than data volumes of the other (K-1) data packets, and a receiving duration of the K consecutive data packets is less than or equal to a frame interval determined according to the frame rate.

34. The communication device according to any one of claims 19 to 23, wherein the communication device is a user plane function network element, and the processing unit is further configured to:
determine data packets belonging to the same media unit according to an identifier of an IP layer packet header in a data packet included in the first data stream; or
determine the data packets belonging to the same media unit in the first data stream according to a deep packet inspection (DPI) algorithm.

35. The communication device according to any one of claims 19 to 23, wherein when the processing unit is configured to add first information into at least one media unit in the first data stream, the processing unit is further configured to:
add the first information into each data packet of the first media unit; or
add the first information into a first data packet of the first media unit; or
add the first information into a last data packet of the first media unit; or
add the first information into the first data packet and the last data packet of the first media unit.

36. The communication device according to claim 35, wherein the first information is added into a General Packet Radio Service (GPRS) Tunneling Protocol (GTP-U) packet header or an Internet Protocol (IP) layer packet header of a user plane of the data packet.

37. A communication device comprising: a processor and a memory; wherein
the memory is configured to store a program instruction;
the processor is configured to call the program instruction stored in the memory, and based on the program instruction, the processor is configured to: receive a first data stream comprising at least one media unit, each of the at least one media unit comprising one or more data packets; add first information into at least one media unit in the first data stream according to media unit information, and/or obtain a second data stream by adding or modifying a quality of service (QoS) profile, the first information comprising identification information configured for identifying a data packet belonging to a first media unit, and the first media unit being any one of the at least one media unit; and
the communication device is an access network device or a user plane function (UPF).

38. The communication device according to claim 37, wherein the media unit is any one of a data frame, an application data unit (ADU), a group of pictures (GOP), a slice, a tile, or a slice segment (SS).

39. The communication device according to claim 37, wherein the first information further comprises number information configured for indicating number of the data packets included in the first media unit.

40. The communication device according to claim 37, wherein the media unit information comprises an identifier indicative of adding the first information to the first media unit, and/or, adding or modifying the QoS profile.

41. The communication device according to claim 40, wherein the media unit information further comprises first information corresponding to the first media unit and/or the QoS profile.

42. The communication device according to any one of claims 37 to 41, wherein the processor is further configured to:
obtain the media unit information from an application function (AF) network element, a session management function (SMF) network element, or a policy control function (PCF) network element.

43. The communication device according to any one of claims 37 to 41, wherein the communication device is an access network device, and the processor is further configured to:
obtain the media unit information from the user plane function (UPF).

44. The communication device according to any one of claims 37 to 41, wherein the communication device is a user plane function network element, and the first data stream belongs to a first terminal device, and
the processor is further configured to:
send, based on completing update of a protocol data unit (PDU) session in a handover process of the first terminal device and completing acquisition of a data packet belonging to a second media unit, the second media unit to a target network device accessed after handover of the first terminal device, the second media unit being a first media unit in the first data stream belonging to the first terminal device received by the processor after the PDU session is updated.

45. The communication device according to claim 44, wherein the processor is further configured to:
send a first message to a source network device accessed before the handover of the first terminal device, the first message being configured for indicating the source network device to disconnect a tunneling connection from the target network device accessed after the handover of the first terminal device.

46. The communication device according to any one of claims 37 to 41, wherein the communication device is a user plane function network element, and the first data stream belongs to a first terminal device, and
the processor is further configured to:
send, based on completing update of a protocol data unit (PDU) session in a handover process of the first terminal device and completing acquisition of a data packet belonging to a third media unit, the third media unit to a source network device accessed before handover of the first terminal device, the third media unit being a last media unit in the first data stream belonging to the first terminal device received by the processor before the PDU session is updated; and
send, after obtaining a data packet belonging to a fourth media unit, the fourth media unit to a target network device accessed after the handover of the first terminal device, the fourth media unit being a next media unit adjacent to the third media unit.

47. The communication device according to any one of claims 37 to 41, wherein the processor is further configured to:
obtain a detection rule of a media unit; and
determine the data packet belonging to the first media unit in the first data stream according to the detection rule of the media unit.

48. The communication device according to claim 47, wherein the detection rule comprises a frame rate, and the processor is further configured to:
determine a frame interval according to the frame rate, and determine a boundary of the first media unit within a duration corresponding to the frame interval;
wherein a time interval between a last data packet in the first media unit and a first data packet included in a fifth media unit is greater than a time interval between any two data packets included in the first media unit, the fifth media unit being a next media unit adjacent to the first media unit in the first data stream.

49. The communication device according to any one of claims 37 to 41, wherein the processor is further configured to:
determine that M consecutive data packets in the first data stream belong to the first media unit, the first media unit being a media unit detected in the first data stream, and the M being an integer greater than or equal to 1;
wherein a data volume of a last data packet in the M consecutive data packets is less than a maximum transfer unit (MTU) capacity, and data volumes of data packets other than the last data packet among the M consecutive data packets are equal to the MTU capacity.

50. The communication device according to any one of claims 37 to 41, wherein the media unit comprises a data frame, an ADU or a GOP, the media unit comprises one or more coding units, and each of the one or more coding units is any one of the slice, the SS or the tile;
the processor is further configured to:
determine that N consecutive data packets in the first data stream belong to the same coding unit, the N being a positive integer greater than or equal to 1;
wherein a data volume of a last data packet in the N consecutive data packets is less than a maximum transfer unit (MTU) capacity, and data volumes of data packets other than the last data packet among the N consecutive data packets are equal to the MTU capacity.

51. The communication device according to claim 47, wherein the detection rule at least comprises a frame rate, and the processor is further configured to:
determine that K consecutive data packets in the first data stream belong to the first media unit according to the detection rule, the K being an integer greater than or equal to 1;
wherein a data volume of one of the K consecutive data packets is less than data volumes of the other (K-1) data packets, and a receiving duration of the K consecutive data packets is less than or equal to a frame interval determined according to the frame rate.

52. The communication device according to any one of claims 37 to 41, wherein the communication device is a user plane function network element, and the processor is further configured to:
determine data packets belonging to the same media unit according to an identifier of an IP layer packet header in a data packet included in the first data stream; or
determine the data packets belonging to the same media unit in the first data stream according to a deep packet inspection (DPI) algorithm.

53. The communication device according to any one of claims 37 to 41, wherein the processor is configured to:
add the first information into each data packet of the first media unit; or
add the first information into a first data packet of the first media unit; or
add the first information into a last data packet of the first media unit; or
add the first information into the first data packet and the last data packet of the first media unit.

54. The communication device according to claim 53, wherein the first information is added into a General Packet Radio Service (GPRS) Tunneling Protocol (GTP-U) packet header or an Internet Protocol (IP) layer packet header of a user plane of the data packet.

55. A computer-readable storage medium, wherein computer instructions are stored on the computer-readable storage medium, and the computer instructions are executable by a computer, whereby the computer is caused to perform the method according to any one of claims 1 to 18.
